# EUROPEAN PATENT APPLICATION

(11) **EP 4 818 937 A1**
(43) Date of publication of application: **07.10.2026**
(21) Application number: 24897153.3
(22) Date of filing: 23.10.2024
(51) Int. Cl.: G06F 21/33, G06F 21/32, H04L 9/32, H04L 9/40

(54) **TERMINAL, SYSTEM, TERMINAL CONTROL METHOD, AND STORAGE MEDIUM**

(30) Priority: 30.11.2023 JP 2023202542
(71) Applicant: NEC Corporation, 108-8001 Tokyo (JP)
(72) Inventor: ARATA, Yuki, Tokyo 108-8001 (JP); HOSAKA, Yoshifumi, Tokyo 108-8001 (JP); TOMIMORI, Hiroyuki, Tokyo 108-8001 (JP); SATO, Daiki, Tokyo 108-8001 (JP)
(74) Representative: Betten & Resch
(86) International application number: PCT/JP2024/037719
(87) International publication number: WO 2025/115463

(57) **Abstract**

To provide a terminal that prevents unauthorized acquisition of a certificate of biometric information to be stored in a smartphone or the like. The terminal includes an acquisition means, a verification means, and a storage means. The acquisition means acquires, from a certificate issuer that holds biometric information of a user, a biometric information certificate that certifies biometric information of a person to whom a certificate is issued and includes biometric information of the person to whom the certificate is issued. The verification means performs identity verification using biometric information obtained from the acquired biometric information certificate and biometric information of the user. The storage means stores the acquired biometric information certificate in a case where the identity verification is determined to be successful.

## Description

### [Technical Field]

The present invention is based on a priority claim of Japanese Patent Application: Japanese Patent Application No. 2023-202542 (filed on November 30, 2023), and the entire contents of the application are incorporated herein by reference.

The present invention relates to a terminal, a system, a control method of a terminal, and a program.

### [Background Art]

There exists a technology related to authentication of a user.

For example, an identity authentication system of Patent Literature 1 includes a user terminal and a service provider apparatus that are connected so as to be capable of communicating with each other. On the user terminal side, a matching unit performs matching processing between biometric information input from a sensor and registered biometric information registered in advance in a registered biometric information storage unit, and transmits a result thereof to the service provider apparatus as an identity authentication processing result. At this time, a processing certificate generation unit generates certificate information for guaranteeing contents of the authentication processing or an authentication accuracy thereof, and transmits the certificate information to the service provider apparatus. On the service provider apparatus side, a processing certificate verification unit connects a variety of user terminals that perform identity verification processing based on the identity authentication processing result and the certificate information, thereby realizing a system capable of providing services corresponding to different accuracy levels of the identity verification processing.

### [Citation List]

### [Patent Literature]

### International Publication WO2007/023756

### [Summary of Invention]

### [Technical Problem]

As disclosed in Patent Literature 1, biometric information is used for identity verification of a user. Here, in recent years, due to an increase in awareness of personal information protection, dissemination of a system in which a user manages information by oneself (a self-sovereign system) has started. For example, storing digital content such as an identification document in a digital wallet of a smartphone or the like is performed. Although storing a certificate of biometric information in the digital wallet is assumed, there is a concern about fraud in which a certificate of biometric information of another person is stored in the digital wallet.

It is a main object of the present invention to provide a terminal, a system, a control method of a terminal, and a program that contribute to preventing unauthorized acquisition of a certificate of biometric information to be stored in a smartphone or the like.

### [Solution to Problem]

According to a first aspect of the present invention, there is provided a terminal including: an acquisition means that acquires, from a certificate issuer that holds biometric information of a user, a biometric information certificate that certifies biometric information of a person to whom a certificate is issued and includes biometric information of the person to whom the certificate is issued; a verification means that performs identity verification using biometric information obtained from the acquired biometric information certificate and biometric information of the user; and a storage means that stores the acquired biometric information certificate in a case where the identity verification is determined to be successful.

According to a second aspect of the present invention, there is provided a system including: a server apparatus that is managed by a certificate issuer that holds biometric information of a user; and a terminal, wherein the terminal includes: an acquisition means that acquires, from the server apparatus, a biometric information certificate that certifies biometric information of a person to whom a certificate is issued and includes biometric information of the person to whom the certificate is issued; a verification means that performs identity verification using biometric information obtained from the acquired biometric information certificate and biometric information of the user; and a storage means that stores the acquired biometric information certificate in a case where the identity verification is determined to be successful.

According to a third aspect of the present invention, there is provided a control method of a terminal, the control method including: acquiring, from a certificate issuer that holds biometric information of a user, a biometric information certificate that certifies biometric information of a person to whom a certificate is issued and includes biometric information of the person to whom the certificate is issued; performing identity verification using biometric information obtained from the acquired biometric information certificate and biometric information of the user; and storing the acquired biometric information certificate in a case where the identity verification is determined to be successful.

According to a fourth aspect of the present invention, there is provided a computer-readable storage medium storing a program causing a computer mounted on a terminal to perform processing for: acquiring, from a certificate issuer that holds biometric information of a user, a biometric information certificate that certifies biometric information of a person to whom a certificate is issued and includes biometric information of the person to whom the certificate is issued; performing identity verification using biometric information obtained from the acquired biometric information certificate and biometric information of the user; and storing the acquired biometric information certificate in a case where the identity verification is determined to be successful.

### [Advantageous Effects of Invention]

According to the individual aspects of the present invention, there are provided a terminal, a system, a control method of a terminal, and a program that contribute to preventing unauthorized acquisition of a certificate of biometric information to be stored in a smartphone or the like. It should be noted that the advantageous effect of the present invention is not limited to the above advantageous effect. The present invention may provide other advantageous effects, instead of or in addition to the above advantageous effect.

### [Brief Description of the Drawings]

[Fig. 1] Fig. 1 is a diagram for illustrating an outline of an example embodiment.
[Fig. 2] Fig. 2 is a flowchart for illustrating an operation of an example embodiment.
[Fig. 3] Fig. 3 is a diagram for illustrating an example of a schematic configuration of an information processing system according to an example embodiment of the present disclosure.
[Fig. 4] Fig. 4 is a diagram for illustrating an example of a display of a terminal according to the example embodiment of the present disclosure.
[Fig. 5] Fig. 5 is a diagram for illustrating an operation of the information processing system according to the example embodiment of the present disclosure.
[Fig. 6] Fig. 6 is a diagram for illustrating an operation of the information processing system according to the example embodiment of the present disclosure.
[Fig. 7] Fig. 7 is a diagram for illustrating an operation of the information processing system according to the example embodiment of the present disclosure.
[Fig. 8] Fig. 8 is a diagram for illustrating an operation of the information processing system according to the example embodiment of the present disclosure.
[Fig. 9] Fig. 9 is a diagram for illustrating an example of a processing configuration of the terminal according to the example embodiment of the present disclosure.
[Fig. 10] Fig. 10 is a flowchart for illustrating an example of an operation of an acquisition control unit according to the example embodiment of the present disclosure.
[Fig. 11] Fig. 11 is a diagram for illustrating an example of a processing configuration of a server apparatus according to the example embodiment of the present disclosure.
[Fig. 12] Fig. 12 is a diagram for illustrating an example of a processing configuration of a business operator terminal according to the example embodiment of the present disclosure.
[Fig. 13] Fig. 13 is a flowchart for illustrating an example of an operation of a service provision control unit according to the example embodiment of the present disclosure.
[Fig. 14] Fig. 14 is a sequence diagram for illustrating an example of an operation of the information processing system according to the example embodiment of the present disclosure.
[Fig. 15] Fig. 15 is a sequence diagram for illustrating an example of an operation of the information processing system according to the example embodiment of the present disclosure.
[Fig. 16] Fig. 16 is a diagram for illustrating an example of a processing configuration of the terminal according to a variation of the example embodiment of the present disclosure.
[Fig. 17] Fig. 17 is a diagram for illustrating an example of a display of the terminal according to the variation of the example embodiment of the present disclosure.
[Fig. 18] Fig. 18 is a diagram for illustrating an operation of the information processing system according to the variation of the example embodiment of the present disclosure.
[Fig. 19] Fig. 19 is a diagram for illustrating an example of a display of the terminal according to the variation of the example embodiment of the present disclosure.
[Fig. 20] Fig. 20 is a diagram for illustrating an example of a display of the terminal according to the variation of the example embodiment of the present disclosure.
[Fig. 21] Fig. 21 is a diagram for illustrating an operation of the information processing system according to the example embodiment of the present disclosure.
[Fig. 22] Fig. 22 is a diagram for illustrating an example of a hardware configuration of the terminal according to the present disclosure.

### [Example Embodiment]

First, an outline of an example embodiment will be described. It should be noted that, in the following outline, various components are denoted by reference characters for the sake of convenience. That is, the following reference characters are used as examples to facilitate the understanding of the present invention. Thus, the description of the outline is not intended to impose any limitations. In addition, unless otherwise specified, an individual block illustrated in the drawings represents a configuration of a functional unit, not a hardware unit. An individual connection line between blocks in the drawings signifies both one-way and two-way directions. An arrow schematically illustrates a principal signal (data) flow and does not exclude bidirectionality. In the present description and drawings, elements that can be described in a like way will be denoted by a like reference character, and redundant description thereof will be omitted as needed.

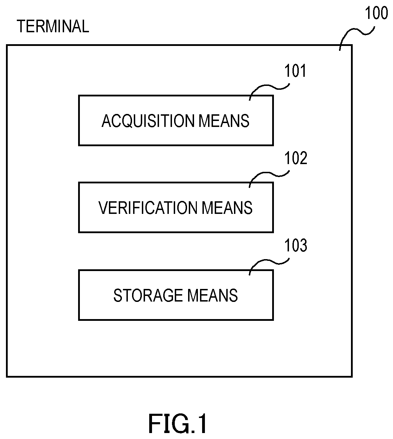

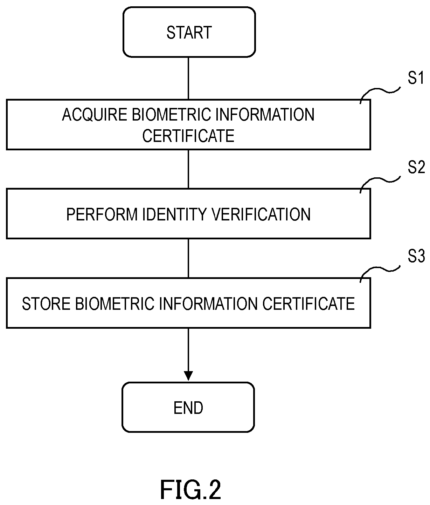

A terminal 100 according to an example embodiment includes an acquisition means 101, a verification means 102, and a storage means 103 (see Fig. 1). The acquisition means 101 acquires, from a certificate issuer that holds biometric information of a user, a biometric information certificate that certifies biometric information of a person to whom a certificate is issued and includes biometric information of the person to whom the certificate is issued (step S1 in Fig. 2). The verification means 102 performs identity verification using biometric information obtained from the acquired biometric information certificate and biometric information of the user (step S2). The storage means 103 stores the acquired biometric information certificate in a case where the identity verification is determined to be successful (step S3).

The terminal 100 performs identity verification using biometric information certified by the certificate (identity verification of a user who operates the terminal 100) upon acquiring the biometric information certificate. In a case where the identity verification is successful, the terminal 100 accepts the biometric information certificate acquired from the certificate issuer. For example, the terminal 100 stores the acquired biometric information certificate in a digital wallet. As a result, storing the biometric information certificate in a smartphone or the like of a user having biometric information different from the biometric information certified by the biometric information certificate is prevented. That is, unauthorized acquisition of the biometric information certificate to be stored in a smartphone or the like is prevented.

Hereinafter, specific example embodiments will be described in more detail with reference to drawings.

### [First Example Embodiment]

A first example embodiment will be described in more detail with reference to drawings.

### [Configuration of System]

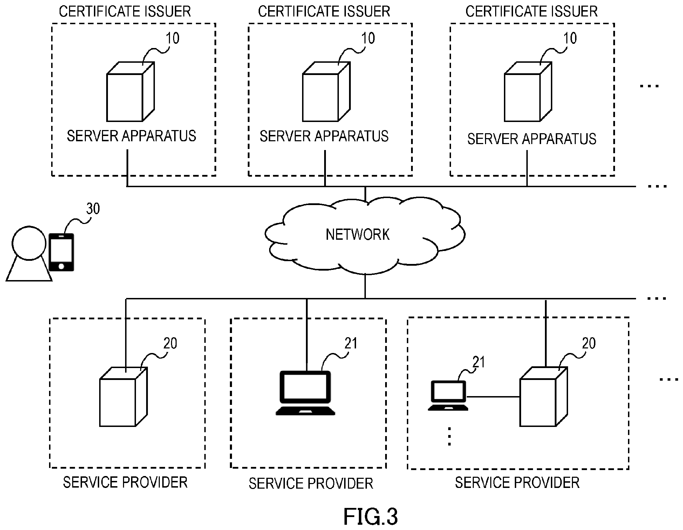

As shown in Fig. 3, an information processing system according to the first example embodiment includes at least one or more certificate issuers and at least one or more service providers.

A certificate issuer is an entity that issues a certificate to a user. For example, the certificate issuer issues a certificate that certifies "identity" or "attributes" of the user. For example, the certificate issuer issues an identification document that certifies a name, gender, date of birth, address, and the like of the user.

Alternatively, the certificate issuer issues a "biometric information certificate" that certifies "biometric information," which is a physical characteristic of the user. The biometric information certificate certifies that biometric information included in the certificate is biometric information of a person to whom a certificate is issued. That is, the certificate issuer certifies that biometric information included in the biometric information certificate is biometric information of a person to whom a certificate is issued.

Note that examples of the biometric information include data (feature values) calculated from physical features unique to an individual, such as a face, a fingerprint, a voiceprint, a vein, a retina, or an iris pattern of an eye. Alternatively, the biometric information may be image data such as a face image, a fingerprint image, and so on. The biometric information may be anything that includes physical characteristics of a user as information. **In** the present application, a case in which biometric information about a "face" of a person (a face image or a feature value generated from the face image) is used will be described.

Alternatively, the certificate issuer issues a certificate that certifies "rights" or "qualifications" of a user. For example, the certificate issuer issues a "service eligibility certificate" that certifies that a user has a qualification (a right) to receive provision of a predetermined service.

For example, a public institution that issues an identification document such as a driver's license, a passport, a My Number card, and the like corresponds to the certificate issuer. Alternatively, a company, a university, or the like that holds a face image of a user (an employee, a student) corresponds to the certificate issuer.

Alternatively, a business operator that provides a service to a user (a customer) corresponds to the certificate issuer. For example, a ticket vendor that sells tickets such as tickets for an aircraft, a railway, a concert, and the like corresponds to the certificate issuer.

It should be noted that a ticket sold by the ticket vendor corresponds to the above-described service eligibility certificate. In the following description, a certificate related to a ticket necessary for a user to receive provision of a service may be referred to as a "ticket certificate." The ticket certificate is one of the service eligibility certificates.

Each certificate issuer includes a server apparatus 10. The server apparatus 10 is a server that performs processing and operations necessary for executing business of the certificate issuer. The server apparatus 10 may be managed and operated by the certificate issuer, or management and operation may be entrusted to another business operator or the like. The server apparatus 10 may be installed in a building of the certificate issuer, or may be installed on a network (on a cloud).

A service provider is a business operator that provides a service to a user. As described above, a ticket vendor that sells a ticket to a user is a service provider. Alternatively, a business operator that operates a theme park or holds a concert corresponds to the service provider. Alternatively, a business operator that operates a transportation means such as a railway, a bus, an aircraft, and the like corresponds to the service provider. Alternatively, a business operator such as a retail store, a restaurant, and the like corresponds to the service provider. The service provider is not limited to a private company, and a public institution such as a city office is also included in the service provider of the present disclosure.

It should be noted that, depending on a business type or a business form of a service provider, the same business operator performs business as a certificate issuer or performs business as a service provider.

Each service provider includes a service server 20 and a business operator terminal 21 for providing a service to a user. For example, the service server 20 provides a service to a user via a website. For example, the service server 20 provides an online service to a user without requiring an instruction or an operation from employees and the like of the service provider (the service server 20 automatically and autonomously provides the service).

Alternatively, employees and the like of the service provider provide a service to a user by operating the business operator terminal 21. The business operator terminal 21 may be a terminal such as a personal computer, a tablet-type terminal, a POS (Point of Sale) terminal, or a signage-type terminal.

Alternatively, the service server 20 and the business operator terminal 21 are connected, and employees and the like of the service provider may provide a service to a user while referring to information and the like stored in the service server 20 via the business operator terminal 21.

A user possesses a terminal 30. For example, the user operates the terminal 30 to request (demand) issuance of a certificate from a certificate issuer. In addition, the user provides, to the service provider, a certificate requested by the service provider (for example, a service eligibility certificate; a ticket certificate) using the terminal 30.

Each apparatus shown in Fig. 3 is connected to a network. Specifically, the server apparatus 10, the service server 20, the business operator terminal 21, and the terminal 30 are connected to the network by wired or wireless communication means.

A configuration of the information processing system shown in Fig. 3 is an example and is not intended to limit the configuration. For example, the server apparatus 10 of each certificate issuer and the apparatus of the service provider (the service server 20, the business operator terminal 21) may belong to different networks. Alternatively, each certificate issuer may include a plurality of server apparatuses 10. Load distribution and redundancy may be realized by the plurality of server apparatuses 10. Similarly, each service provider may include a plurality of service servers 20 and a plurality of business operator terminals 21.

### [Outline of Operation]

Next, a schematic operation of the information processing system according to the first example embodiment will be described.

### <Preparation of Digital Wallet>

The terminal 30 of a user includes a digital wallet function. The digital wallet is an electronic information storage service in which information security such as integrity, reliability, and availability of data is ensured.

The user installs, on the terminal 30 possessed by the user, an application for implementing the digital wallet. The user can store, in the terminal 30, various digital contents such as an identification document such as an employee ID card and a student ID card, a ticket certificate such as an airline ticket and a concert ticket, a biometric information certificate, electronic money, credit card information, and the like by opening the digital wallet in the terminal 30.

### <Acquisition of Digital Contents>

The user who has opened the digital wallet acquires digital contents to be stored in the digital wallet.

The user operates the terminal 30 to request issuance of a certificate from a certificate issuer. Specifically, the digital wallet application performs a certificate issuance request to the certificate issuer. All or a part of the certificate issuers issue, as a certificate, VCs (Verifiable Credentials) for which verification of contents is possible online. In the following description, VCs are referred to as "credential certificates."

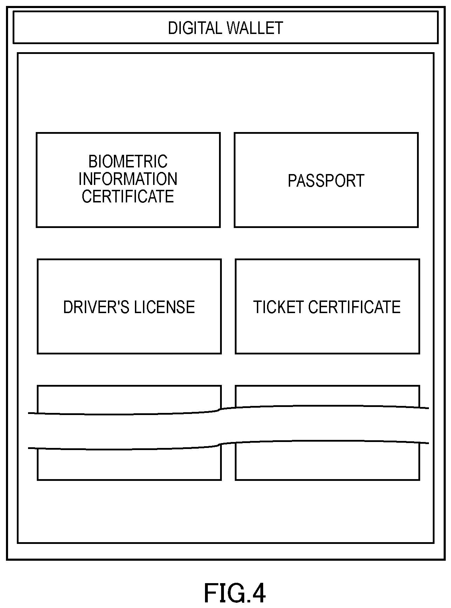

By acquiring certificates from each certificate issuer, digital contents as shown in Fig. 4 are stored in the terminal 30 of the user, for example. The digital contents stored in the terminal 30 include a biometric information certificate, a passport, a driver's license, a service eligibility certificate (a ticket certificate), electronic money, and the like.

Here, in a case where the digital wallet is opened, the user first acquires a biometric information certificate related to biometric information of the user. The user acquires a biometric information certificate (VCs) issued as a credential certificate. Subsequently, the user acquires an identification document such as an employee ID card and a service eligibility certificate. For example, the user acquires a service eligibility certificate (VCs) issued as a credential certificate.

It should be noted that, in the following description, in a case where no particular explanation is provided, a biometric information certificate and a service eligibility certificate are credential certificates.

### <Procedure for Acquiring Credential Certificate>

First, acquisition of a credential certificate will be described. A procedure common to acquisition of a biometric information certificate and a service eligibility certificate will be described as a procedure for acquiring a credential certificate. Subsequently, procedures different between acquisition of the biometric information certificate and the service eligibility certificate will be described.

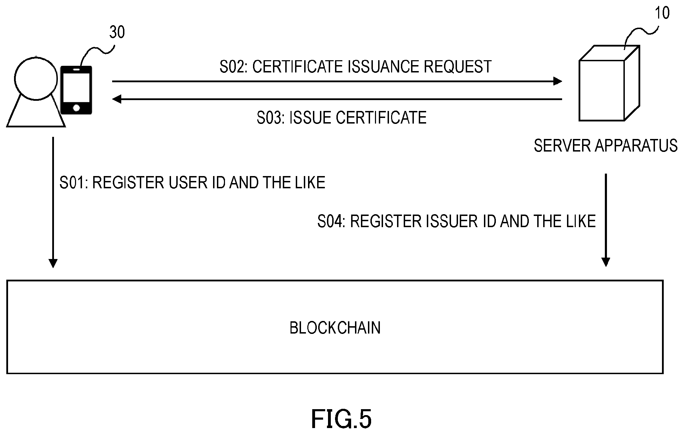

Prior to a certificate issuance request of a credential certificate, the terminal 30 of the user generates a pair of a public key and a private key. In addition, the terminal 30 generates a decentralized identifier (DID; Decentralized Identifier). The terminal 30 registers the generated DID (user ID; holder ID) and the public key in a blockchain (step S01 in Fig. 5).

Furthermore, the terminal 30 of the user requests issuance of a credential certificate to a certificate issuer (the server apparatus 10) while presenting a user ID. Specifically, the terminal 30 transmits, to the server apparatus 10, a "certificate issuance request" including information related to a certificate for which issuance is requested (for example, a type of a credential certificate), information for identifying a target to be certified by the credential certificate, a user ID, and the like (step S02).

It should be noted that the server apparatus 10 generates and stores, in advance, a DID (issuer ID), a private key, and a public key of an issuer.

Upon receiving the certificate issuance request, the certificate issuer determines whether issuance of a credential certificate desired by the user is possible.

In a case where issuance of the credential certificate desired by the user is possible, the server apparatus 10 generates a credential certificate including an issuer ID and a user ID.

Specifically, the server apparatus 10 generates a credential certificate including metadata such as a type of the credential certificate, a name of an issuing organization, an issuance date and time, a validity period, and the like, credential information itself, and public key information and an electronic signature of the issuer. It should be noted that specific information certified by the issuer is described in the credential information itself.

The server apparatus 10 transmits the generated credential certificate to the terminal 30 of the user (a user who becomes a holder of the certificate; a requester of issuance of the certificate) (certificate issuance; step S03).

Furthermore, the server apparatus 10 registers the issuer ID and the generated public key and the like in the blockchain (step S04).

The terminal 30 stores the received credential certificate in the digital wallet. Upon storing the credential certificate in the digital wallet, the terminal 30 performs identity verification of the user.

### <Acquisition of Biometric Information Certificate>

The user operates the terminal 30 to request issuance of a biometric information certificate from a company, a university, or the like to which the user belongs. That is, the company, the university, or the like becomes an issuer of the biometric information certificate. Here, a case where the user requests issuance of a biometric information certificate related to a "face image" from a company at which the user works will be described. The terminal 30 acquires a biometric information certificate related to a face of a person.

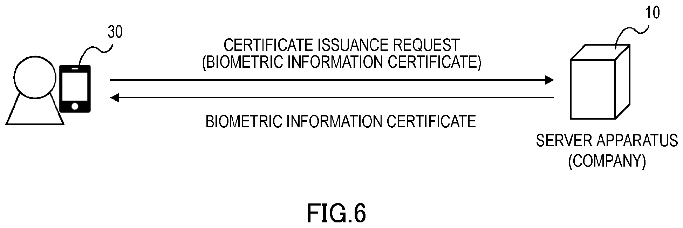

The terminal 30 of the user sets "biometric information certificate" as a type of a certificate for which issuance is requested, and sets "employee number" and "face image" as information for identifying a target to be certified, respectively, and transmits a "certificate issuance request" related to the biometric information certificate to the server apparatus 10 (see Fig. 6). It should be noted that, as information for identifying a certification target, a name of the user or a combination of a name and a date of birth of the user and the like may be used.

It should be noted that, upon requesting issuance of the biometric information certificate, information for identifying a target to be certified by the biometric information certificate includes information for identifying a person to whom a certificate is issued of the biometric information certificate (for example, an employee number) and a type of biometric information for which certification is requested by the biometric information certificate (for example, a face image).

In a case where a user who desires issuance of the biometric information certificate is an employee of the company (in a case where an employee corresponding to the employee number exists), the server apparatus 10 generates a biometric information certificate (a face information certificate; face VCs) using a face image of the employee. It should be noted that a face image acquired at a time of joining the company or the like (a face image registered in the server apparatus 10 through identity verification at a time of joining the company) is stored in credential information itself of the biometric information certificate.

The server apparatus 10 transmits the generated biometric information certificate (face information certificate; face VCs) to the terminal 30.

Upon receiving the biometric information certificate, the terminal 30 performs identity verification of the user. At that time, the terminal 30 acquires biometric information of the user. Specifically, the terminal 30 instructs the user to perform self-image capturing and acquires a face image of the user.

The terminal 30 performs identity verification using a face image obtained from the biometric information certificate and a face image obtained by self-image capturing. In a case where the identity verification is successful, the terminal 30 stores the biometric information certificate (face VCs) in the digital wallet.

In a case where the identity verification fails, the terminal 30 discards the acquired biometric information certificate.

In this manner, upon acquiring the biometric information certificate, the terminal 30 confirms whether biometric information certified by the certificate matches biometric information of a user (an operator) of the terminal 30. In a case where the two pieces of biometric information match (in a case where the identity verification is successful), the terminal 30 accepts the biometric information certificate acquired from an organization such as a company, a university, and the like. As a result, fraud in which a user acquires a biometric information certificate of another person and stores the biometric information certificate in the user's own digital wallet is prevented. That is, impersonation is prevented by a simple method of performing identity verification upon storing biometric information in the digital wallet. In this manner, the terminal 30 stores biometric information of a digital wallet holder in the digital wallet as a biometric information certificate (a biometric information certificate issued as a credential certificate).

### <Acquisition of Service Eligibility Certificate>

Upon storing the biometric information certificate in the digital wallet, the user acquires a credential certificate other than the biometric information certificate. Here, a case where the user acquires a service eligibility certificate related to a concert ticket from a ticket vendor will be described as an example.

It should be noted that the user has an account of the ticket vendor, and a ticket has already been purchased in the account. In a case where the user purchases a ticket, a ticket ID for identifying the purchased ticket is issued to a ticket purchaser.

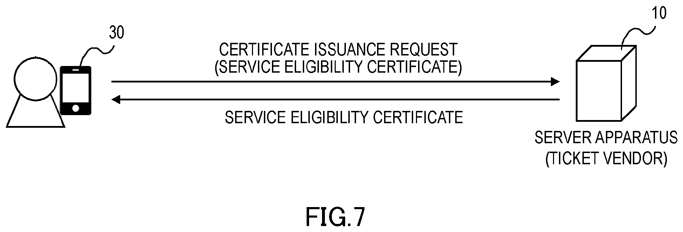

The terminal 30 of the user sets "service eligibility certificate" as a type of a certificate for which issuance is requested, sets "ticket ID" as information for identifying a certification target by the service eligibility certificate, and transmits a "certificate issuance request" related to the service eligibility certificate to the server apparatus 10 (see Fig. 7).

In a case where a ticket purchased by a user who desires issuance of the service eligibility certificate exists (in a case where the ticket ID is valid), the server apparatus 10 generates a service eligibility certificate (a ticket certificate) using purchased ticket information of the ticket purchaser. It should be noted that information related to the ticket purchased by the user (for example, a concert name, a concert date and time, a concert venue, a seat type, and the like) is stored in credential information itself of the service eligibility certificate.

The server apparatus 10 transmits the generated service eligibility certificate (ticket certificate) to the terminal 30.

Upon receiving the service eligibility certificate (ticket certificate), the terminal 30 performs identity verification of the user. At that time, the terminal 30 acquires biometric information of the user. Specifically, the terminal 30 instructs the user to perform self-image capturing and acquires a face image of the user.

The terminal 30 performs identity verification using a face image obtained from the biometric information certificate (face VCs) stored in the digital wallet and a face image obtained by self-image capturing. **In** a case where the identity verification is successful, the terminal 30 stores the service eligibility certificate in the digital wallet.

**In** a case where the identity verification fails, the terminal 30 discards the service eligibility certificate.

**In** this manner, the terminal 30 performs identity verification upon acquiring the service eligibility certificate. By the identity verification, identity of a user who has received issuance of the biometric information certificate and an operator of the terminal 30 (a recipient of the service eligibility certificate) is confirmed. As a result, fraud in which a user borrows a terminal 30 of another person and stores, in a digital wallet of the borrowed terminal 30, a certificate of a ticket purchased by the user (a service eligibility certificate) is prevented. **In** this manner, the terminal 30 stores, in the digital wallet, a service eligibility certificate of a digital wallet holder (a service eligibility certificate issued as a credential certificate).

### <Receiving Service>

Upon storing the biometric information certificate and the service eligibility certificate in the digital wallet, the user can receive provision of a service from a service provider. At that time, the user presents, to the service provider, a certificate requested by the service provider or a certificate necessary for provision of the service by the service provider. For example, in a case where the user attempts to enter a concert venue, the user presents a service eligibility certificate (a ticket certificate) to a business operator that operates the concert.

Hereinafter, an operation of the information processing system will be described by taking a case where the user enters a concert venue as an example. It should be noted that a business operator terminal 21 is installed at an entrance of the concert venue. Employees and the like of a business operator that operates the concert operate the business operator terminal 21 to determine whether a visitor is permitted to enter. The business operator terminal 21 and the terminal 30 communicate with each other by a short-range wireless communication means such as Bluetooth (registered trademark).

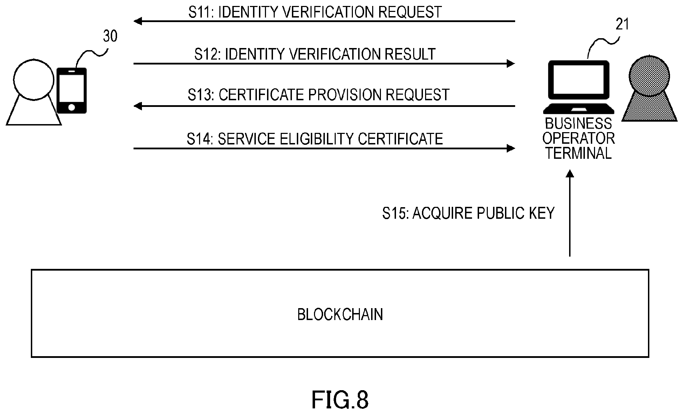

In a case where the user desires to enter the concert venue, the business operator terminal 21 requests the terminal 30 to perform identity verification. For example, the business operator terminal 21 transmits an "identity verification request" to the terminal 30 (step S11 in Fig. 8).

Upon receiving the identity verification request, the terminal 30 captures an operator who operates the terminal 30 and acquires biometric information (a face image). The terminal 30 performs identity verification using the acquired biometric information and biometric information obtained from the biometric information certificate stored in the digital wallet.

The terminal 30 transmits an identity verification result (identity verification success, identity verification failure) to the business operator terminal 21 (step S12).

Upon receiving identity verification success, the business operator terminal 21 requests the terminal 30 to provide information (a service eligibility certificate) necessary for providing a service to the user.

Specifically, the business operator terminal 21 transmits a "certificate provision request" to the terminal 30 (step S13). The certificate provision request includes information related to at least one or more service eligibility certificates necessary for the service provider to provide the service. For example, the certificate provision request includes information for identifying a service eligibility certificate requested to be provided by the service provider. For example, in a case where the business operator terminal 21 requests provision of a ticket certificate, information such as a concert name, a concert date and time, a concert venue, and the like is included in the certificate provision request.

In response to receiving the certificate provision request, the terminal 30 transmits a certificate (a service eligibility certificate) stored in the digital wallet to the business operator terminal 21. Specifically, the terminal 30 selects a specified certificate (a service eligibility certificate) from among a plurality of certificates stored in the digital wallet.

Thereafter, the terminal 30 signs the selected service eligibility certificate using a private key corresponding to a DID (user ID) of the user. The terminal 30 transmits the signed service eligibility certificate to the business operator terminal 21 (step S14).

The business operator terminal 21 verifies validity of the received service eligibility certificate. At that time, the business operator terminal 21 acquires a public key from the block chain (step S15). It should be noted that details regarding verification of validity of the service eligibility certificate will be described later.

In a case where the terminal 30 has succeeded in identity verification and the acquired service eligibility certificate is valid, the business operator terminal 21 provides a service to the user. For example, the business operator terminal 21 notifies employees and the like of the service provider that the user is permitted to enter the concert venue.

It should be noted that, regarding an operation of the information processing system in a case where the user receives provision of a service from the service provider, a case where the service provider uses the business operator terminal 21 has been described as an example. Here, even in a case where the service provider uses the service server 20, a basic operation of the information processing system in a case where the user receives provision of a service from the service provider is the same. The service server 20 requests the terminal 30 to perform identity verification. Thereafter, upon receiving notification of identity verification success, the service server 20 acquires, from the terminal 30, a service eligibility certificate necessary for providing the service.

In this manner, the terminal 30 performs identity verification using the biometric information certificate stored in the digital wallet before providing the service eligibility certificate to the service provider. As a result, fraud in which a user without qualification to receive the service pretends to have qualification to receive the service and receives the service from the service provider is prevented. That is, impersonation fraud is prevented by simplified identity verification at a time of providing the service.

Next, details of the individual apparatuses included in the information processing system according to the first example embodiment will be described.

### [Terminal]

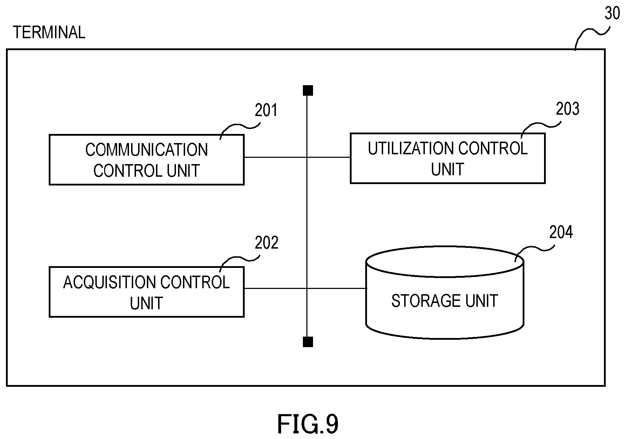

Fig. 9 is a diagram for illustrating an example of a processing configuration (processing modules) of the terminal 30 according to the example embodiment of the present disclosure. Referring to Fig. 9, the terminal 30 includes a communication control unit 201, an acquisition control unit 202, a utilization control unit 203, and a storage unit 204.

The communication control unit 201 is a means for controlling communication with other apparatuses. For example, the communication control unit 201 receives data (packets) from the server apparatus 10. In addition, the communication control unit 201 transmits data to the server apparatus 10. The communication control unit 201 gives data received from other apparatuses to other processing modules. The communication control unit 201 transmits data acquired from other processing modules to other apparatuses. In this manner, other processing modules transmit and receive data to and from other apparatuses via the communication control unit 201. The communication control unit 201 includes a function as a receiving unit that receives data from other apparatuses and a function as a transmitting unit that transmits data to other apparatuses.

It should be noted that the communication control unit 201 also supports short-range wireless communication such as Bluetooth (registered trademark) and NFC (Near Field Communication). The communication control unit 201 communicates with the business operator terminal 21 using short-range wireless communication.

A digital wallet application is implemented by each module of the acquisition control unit 202 and the utilization control unit 203. It should be noted that a detailed description of installation of the digital wallet application will be omitted. This is because installation of the digital wallet application is obvious to a person skilled in the art.

The acquisition control unit 202 is a means for performing control related to acquisition of a credential certificate including a biometric information certificate and a service eligibility certificate. The acquisition control unit 202 requests issuance of a certificate selected by the user to a certificate issuer and stores a certificate acquired from the certificate issuer in the digital wallet.

The acquisition control unit 202 includes a function as an acquisition means and a function as a verification means.

Upon acquiring a biometric information certificate, the acquisition means acquires, from a certificate issuer that holds biometric information of a user, a biometric information certificate that certifies biometric information of a person to whom a certificate is issued and includes biometric information of the person to whom the certificate is issued. The verification means performs identity verification using biometric information obtained from the acquired biometric information certificate and biometric information of the user.

Upon acquiring a service eligibility certificate, the acquisition means acquires, from the certificate issuer, a service eligibility certificate that certifies that the user has a qualification to receive provision of a service. The verification means performs identity verification using biometric information obtained from a stored biometric information certificate and biometric information of the user in response to acquisition of the service eligibility certificate.

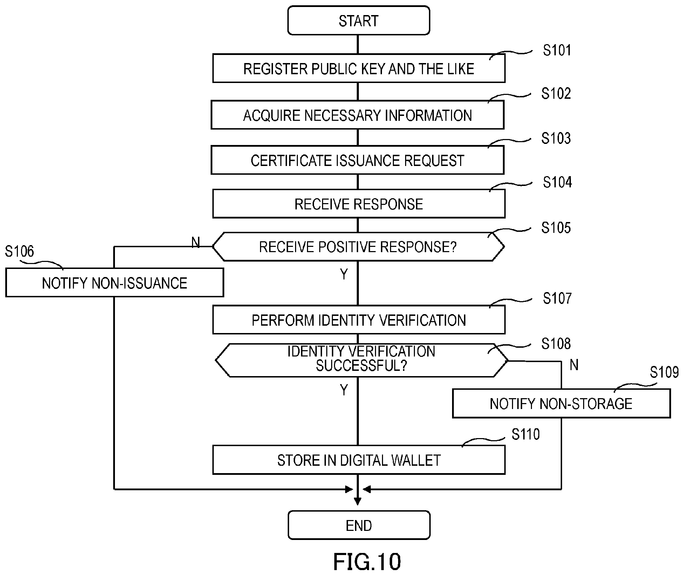

Fig. 10 is a flowchart for illustrating an example of an operation of the acquisition control unit 202. An operation of the acquisition control unit 202 according to the example embodiment of the present disclosure will be described with reference to Fig. 10.

**In** a case where a user who has opened a digital wallet starts a digital wallet application and performs a predetermined operation (for example, pressing of a certificate issuance button), the acquisition control unit 202 performs control related to acquisition of a credential certificate desired by the user.

First, the acquisition control unit 202 generates a pair of a public key and a private key and a user ID (a DID of the user), which is a decentralized identifier. The acquisition control unit 202 registers the generated user ID and the public key in a blockchain (registration of public key and the like; step S101).

Subsequently, the acquisition control unit 202 acquires, using a GUI or the like, information necessary for a certificate issuance request of a credential certificate (acquisition of necessary information; step S102).

Specifically, the acquisition control unit 202 acquires information of a certificate issuer having authority to issue a credential certificate desired by the user (for example, a company name, a university name, a ticket vendor name), a type of a desired certificate (for example, a biometric information certificate, a service eligibility certificate), and the like. Furthermore, the acquisition control unit 202 acquires information for identifying a certification target by the certificate issuer (for example, an employee number and a face image, a ticket ID, and the like).

The acquisition control unit 202 notifies the certificate issuer of the acquired necessary information and the user ID. Specifically, the acquisition control unit 202 notifies the certificate issuer of a type of a credential certificate, information for identifying a certification target, and the user ID.

The acquisition control unit 202 transmits, to the server apparatus 10 of the certificate issuer selected by the user, a "certificate issuance request" including a type of a credential certificate, information for identifying a certification target, a user ID, and the like (step S103).

The acquisition control unit 202 receives, from the server apparatus 10, a response (a positive response, a negative response) to the certificate issuance request (step S104).

In a case where a negative response indicating that issuance of the certificate has failed is received (step S105, No branch), the acquisition control unit 202 notifies the user of a fact that the credential certificate has not been issued (notification of non-issuance; step S106).

In a case where a positive response indicating that issuance of the certificate has succeeded is received (step S105, Yes branch), the acquisition control unit 202 performs identity verification of the user (step S107).

In a case where the user desires issuance of a biometric information certificate, the acquisition control unit 202 acquires biometric information from the biometric information certificate included in the positive response received from the server apparatus 10. That is, the acquisition control unit 202 acquires biometric information (a face image) from credential information itself of the biometric information certificate.

In a case where the user desires issuance of a certificate other than the biometric information certificate (a service eligibility certificate), the acquisition control unit 202 acquires biometric information (a face image) from the biometric information certificate stored in the digital wallet.

Upon acquiring biometric information from the received or stored biometric information certificate, the acquisition control unit 202 acquires biometric information of the user (an operator of the terminal 30). For example, the acquisition control unit 202 prompts the user to capture an image of a face of the user using a GUI (Graphical User Interface) or the like (that is, a face image is acquired by so-called self-image capturing).

The acquisition control unit 202 performs matching processing (authentication processing; one-to-one authentication) using biometric information obtained from the biometric information certificate and biometric information of the user. The acquisition control unit 202 determines whether the two pieces of biometric information substantially match.

Specifically, the acquisition control unit 202 generates feature values from each of the two face images.

It should be noted that, since an existing technology can be used to generate the feature values, a detailed description thereof will be omitted. For example, the acquisition control unit 202 extracts eyes, a nose, a mouth, and the like as feature points from a face image. Thereafter, the acquisition control unit 202 calculates positions of each feature point and distances between the feature points as feature values (generates a feature vector including a plurality of feature values).

Next, the acquisition control unit 202 performs matching processing (authentication processing) using the two generated feature values. Specifically, the acquisition control unit 202 calculates a similarity between corresponding face images using the two feature values. The acquisition control unit 202 determines whether the two images are face images of a same person based on a result of threshold processing on the calculated similarity. It should be noted that the chi-squared distance, the Euclidean distance, or the like can be used for the individual similarity. A greater distance represents a lower similarity, and a shorter distance represents a higher similarity.

In a case where the similarity is greater than a predetermined value (in a case where the distance is shorter than a predetermined value), the acquisition control unit 202 determines that identity verification is successful. In a case where the similarity is equal to or less than the predetermined value, the acquisition control unit 202 determines that identity verification fails.

In a case where identity verification fails (step S108, No branch), the acquisition control unit 202 notifies the user that the credential certificate cannot be stored in the digital wallet (notification of non-storage; step S109). In addition, the acquisition control unit 202 discards the acquired credential certificate (a biometric information certificate, a service eligibility certificate). It should be noted that, in a case where the credential certificate is discarded, the acquisition control unit 202 may notify the server apparatus 10, which is a transmission source of the credential certificate, to that effect.

In a case where identity verification is successful (step S108, Yes branch), the acquisition control unit 202 stores, in the digital wallet, the credential certificate (a biometric information certificate, a service eligibility certificate) received from the certificate issuer (step S110).

The utilization control unit 203 is a means for performing control related to use of digital contents (credential certificates) stored in the digital wallet.

The utilization control unit 203 includes a function as a providing means that performs identity verification using biometric information obtained from the biometric information certificate stored in the digital wallet and, in a case where identity verification is successful, provides the stored service eligibility certificate to a service provider.

The utilization control unit 203 performs identity verification in response to a request from a service provider and provides a certificate stored in the digital wallet, the certificate being specified by the service provider.

Specifically, the utilization control unit 203 processes an identity verification request and a certificate provision request received from the apparatus of the service provider (the service server 20, the business operator terminal 21).

Upon receiving the identity verification request, the utilization control unit 203 acquires biometric information (for example, a face image) of an operator of the apparatus using a GUI or the like. The utilization control unit 203 captures a face of the operator by so-called self-image capturing.

The utilization control unit 203 performs identity verification using the acquired biometric information and biometric information obtained from the biometric information certificate stored in the digital wallet. The utilization control unit 203 performs identity verification in the same manner as the acquisition control unit 202.

The utilization control unit 203 notifies a business operator terminal 21 and the like of an identity verification result (identity verification success, identity verification failure). In a case where identity verification is successful, the utilization control unit 203 transmits a positive response indicating that fact to the business operator terminal 21 and the like. In a case where identity verification fails, the utilization control unit 203 transmits a negative response indicating that fact to the business operator terminal 21 and the like.

In this manner, the utilization control unit 203 performs identity verification using biometric information obtained from a biometric information certificate acquired in advance and biometric information of an operator who operates the apparatus, in response to a request from the service provider.

Upon receiving the certificate provision request, the utilization control unit 203 selects, from among a plurality of credential certificates stored in the digital wallet, a credential certificate (a service eligibility certificate) specified by the service provider. Thereafter, the utilization control unit 203 signs the selected service eligibility certificate using a private key corresponding to a DID (user ID) of the user.

It should be noted that the utilization control unit 203 signs the service eligibility certificate using a private key (a private key corresponding to a user ID) generated at a time of issuance of the service eligibility certificate requested to be provided by the service provider. For example, in a case where the user enters a concert venue, the utilization control unit 203 signs a ticket certificate (a service eligibility certificate) using a private key corresponding to a user ID transmitted to the server apparatus 10 of a ticket vendor.

In a case where the service eligibility certificate specified by the service provider can be provided, the utilization control unit 203 transmits, to the business operator terminal 21 and the like, a positive response including the signed service eligibility certificate. In a case where the service eligibility certificate designated by the service provider cannot be provided, the utilization control unit 203 transmits, to the business operator terminal 21 and the like, a negative response indicating that the service eligibility certificate cannot be provided.

The storage unit 204 is a means for storing information necessary for operation of the terminal 30. The storage unit 204 stores certificates issued from each certificate issuer by a digital wallet.

The storage unit 204 stores a biometric information certificate acquired by the acquisition control unit 202 in a case where the identity verification is determined to be successful by the acquisition control unit 202. The storage unit 204 stores a service eligibility certificate acquired by the acquisition control unit 202 in a case where the identity verification is determined to be successful by the acquisition control unit 202.

In this manner, the storage unit 204 stores a biometric information certificate that certifies that biometric information is biometric information of a person to whom a certificate is issued and includes biometric information of the person to whom a certificate is issued, and a service eligibility certificate that certifies that the user has a qualification to receive provision of a service.

Furthermore, the storage unit 204 stores information of each certificate issuer (a name of the certificate issuer, an address of the server apparatus 10, and the like).

### [Server Apparatus]

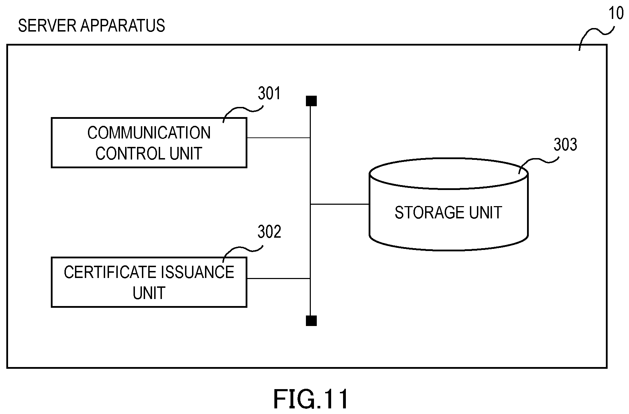

Fig. 11 is a diagram for illustrating an example of a processing configuration (processing modules) of the server apparatus 10 according to the example embodiment of the present disclosure. Referring to Fig. 11, the server apparatus 10 includes a communication control unit 301, a certificate issuance unit 302, and a storage unit 303.

The communication control unit 301 is a means for controlling communication with other apparatuses. For example, the communication control unit 301 receives data (packets) from the terminal 30. In addition, the communication control unit 301 transmits data to the terminal 30. The communication control unit 301 gives data received from other apparatuses to other processing modules. The communication control unit 301 transmits data acquired from other processing modules to other apparatuses. In this manner, other processing modules transmit and receive data to and from other apparatuses via the communication control unit 301. The communication control unit 301 includes a function as a receiving unit that receives data from other apparatuses and a function as a transmitting unit that transmits data to other apparatuses.

The certificate issuance unit 302 is a means for issuing a credential certificate to a user. The certificate issuance unit 302 processes a "certificate issuance request" received from the terminal 30.

Upon receiving the certificate issuance request, the certificate issuance unit 302 searches a database (not illustrated in Fig. 11 and the like) that stores information of the user, using information for identifying a certification target (for example, an employee number and a face image, a ticket ID) included in the certificate issuance request as a key.

In a case where the search fails (for example, a corresponding face image of the user is not registered in the database, or a corresponding ticket ID does not exist), the certificate issuance unit 302 transmits, to the terminal 30, a negative response indicating failure of certificate issuance.

In a case where the search succeeds, the certificate issuance unit 302 determines, as necessary, whether issuance of a credential certificate desired by the user is possible.

For example, in a case where issuance of a biometric information certificate is requested, the certificate issuance unit 302 determines that issuance of a biometric information certificate related to a face image that has not been updated for a long period is not possible. It should be noted that the certificate issuance unit 302 may determine that issuance of the biometric information certificate is possible if a face image is registered in the database regardless of a registration period of the face image.

Alternatively, in a case where a ticket purchased by a ticket purchaser is valid (for example, before a concert is held), the certificate issuance unit 302 determines that issuance of a ticket certificate (a service eligibility certificate) is possible. On the other hand, in a case where the concert has already been held, the certificate issuance unit 302 determines that issuance of the ticket certificate is not possible.

It should be noted that a detailed description regarding management of employees, management of tickets, and the like will be omitted. This is because a detailed description regarding management of employees, management of tickets, and the like is different from the gist of the present disclosure.

In a case where issuance of the credential certificate to the user is not possible, the certificate issuance unit 302 transmits, to the terminal 30, a negative response indicating failure of certificate issuance (certificate issuance not possible).

In a case where issuance of the credential certificate to the user is possible, the certificate issuance unit 302 generates a certificate to be issued to the user (a credential certificate; for example, a biometric information certificate, a service eligibility certificate). The certificate issuance unit 302 generates a credential certificate including an issuer ID and a user ID (a DID of a person to whom a certificate is issued; a user ID included in the certificate issuance request).

Specifically, the certificate issuance unit 302 generates a credential certificate (VCs) including metadata including a type of a credential certificate, an issuing organization name, an issuance date and time, a validity period, and the like, credential information itself, and issuer public key information, a digital signature, and the like. It should be noted that a digital signature added to the credential certificate is performed using a private key corresponding to an issuer ID generated in advance.

The certificate issuance unit 302 transmits the generated credential certificate to the terminal 30. Furthermore, the certificate issuance unit 302 registers, in a blockchain, an issuer ID and a public key and the like generated in advance.

The storage unit 303 is a means for storing information necessary for operation of the server apparatus 10. A database that stores information necessary for issuance of the credential certificate (for example, an employee number of an employee, a face image, and the like) is constructed in the storage unit 303.

### [Business Operator Terminal]

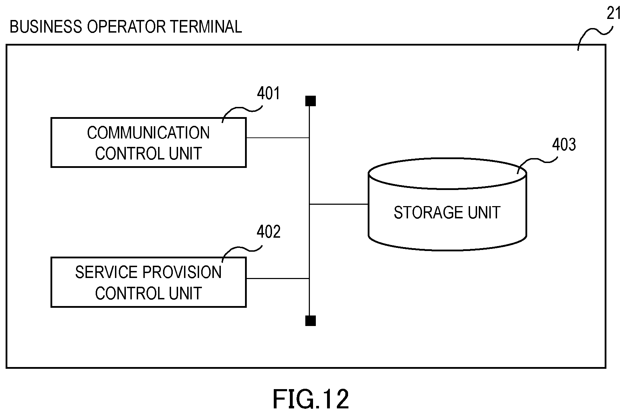

Fig. 12 is a diagram for illustrating an example of a processing configuration (processing modules) of the business operator terminal 21 according to the example embodiment of the present disclosure. Referring to Fig. 12, the business operator terminal 21 includes a communication control unit 401, a service provision control unit 402, and a storage unit 403.

The communication control unit 401 is a means for controlling communication with other apparatuses. For example, the communication control unit 401 receives data (packets) from the terminal 30. In addition, the communication control unit 401 transmits data to the terminal 30. The communication control unit 401 gives data received from other apparatuses to other processing modules. The communication control unit 401 transmits data acquired from other processing modules to other apparatuses. In this way, other processing modules transmit and receive data to and from other apparatuses via the communication control unit 401. The communication control unit 401 includes a function as a receiving unit for receiving data from other apparatuses, and a function as a transmitting unit for transmitting data to other apparatuses.

The service provision control unit 402 is a means for performing control related to a service provided to a user.

In a case where the user desires provision of a service, the service provision control unit 402 requests the terminal 30 to perform identity verification of the user. In a case where identity verification is successful, the service provision control unit 402 acquires a certificate (for example, a ticket certificate) necessary for providing the service.

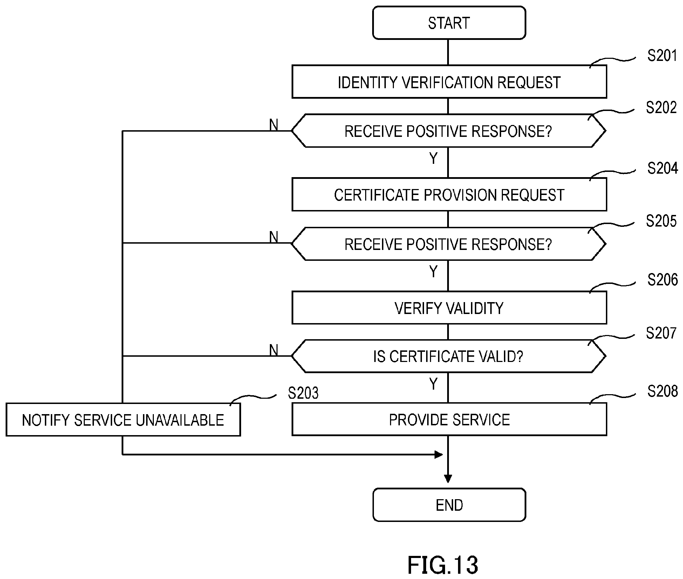

An operation of the service provision control unit 402 will be described with reference to Fig. 13.

The service provision control unit 402 transmits an identity verification request to the terminal 30 of the user (step S201). The service provision control unit 402 requests the terminal 30 to perform identity verification in response to an operation of employees and the like of the service provider.

In a case where a negative response (identity verification failure) is received from the terminal 30 (step S202, No branch), the service provision control unit 402 notifies the user and an employee of the service provider and the like that a service cannot be provided because the identity verification has failed (step S203).

In a case where a positive response (identity verification success) is received from the terminal 30 (step S202, Yes branch), the service provision control unit 402 acquires information (a service eligibility certificate) necessary for providing a service to the user.

Specifically, the service provision control unit 402 transmits a "certificate provision request" to the terminal 30 (step S204). The service provision control unit 402 transmits, to the terminal 30, a certificate provision request including information for identifying a service eligibility certificate required (for example, in a case where a ticket certificate is necessary for providing the service, information such as a concert name, a concert date and time, and the like).

In a case where a negative response (provision of the certificate not possible) is received from the terminal 30 (step S205, No branch), the service provision control unit 402 notifies the user and the like that the service cannot be provided because necessary information cannot be acquired (step S203).

In a case where a positive response (a response including the service eligibility certificate) is received from the terminal 30 (step S205, Yes branch), the service provision control unit 402 verifies validity of the service eligibility certificate included in the positive response (verification of validity; step S206).

The service provision control unit 402 verifies at least one or more items among four items related to validity of the service eligibility certificate.

A first item is verification of a digital signature added to the service eligibility certificate.

In this case, the service provision control unit 402 acquires an issuer ID and a user ID described in the service eligibility certificate. The service provision control unit 402 acquires, from a blockchain, a public key corresponding to the acquired issuer ID. Similarly, the service provision control unit 402 acquires, from the blockchain, a public key corresponding to the acquired user ID.

The service provision control unit 402 verifies a signature of a holder (a user who desires provision of a service) and a signature of an issuer, each added to the service eligibility certificate. By verification of these signatures, the service provision control unit 402 confirms that the service eligibility certificate acquired from the user (a holder of the service eligibility certificate) has not been tampered with and is a certificate issued from a reliable issuer.

In a case where verification of each of the signatures of the holder and the issuer of the service eligibility certificate is successful, the service provision control unit 402 determines that the service eligibility certificate is valid.

A second item is verification that the service eligibility certificate is not set to be invalid.

In this case, the service provision control unit 402 accesses a blockchain and confirms that the received service eligibility certificate is not listed in a revocation list of the certificate issuer. The service provision control unit 402 confirms that the service eligibility certificate acquired from the user has not been invalidated by the issuer before an expiration date of the service eligibility certificate arrives.

In a case where the service eligibility certificate is not listed in the revocation list, the service provision control unit 402 determines that the acquired service eligibility certificate is valid.

A third item is verification that a validity period (an expiration date) of the service eligibility certificate has not elapsed.

The service provision control unit 402 confirms a validity period set in the service eligibility certificate. In a case where the validity period set in the service eligibility certificate has not elapsed, the service provision control unit 402 determines that the acquired service eligibility certificate is valid.

A fourth item is verification of credential information certified by the service eligibility certificate.

In this case, the service provision control unit 402 reads credential information (for example, ticket information) from credential information itself included in the service eligibility certificate and determines, based on the credential information, whether the user has an authority (a qualification) to receive provision of a service.

For example, in a case where a concert date and time and a concert venue obtained from the ticket information are correct, the service provision control unit 402 determines that the user has an authority to receive the service (a qualification to enter the concert venue). On the other hand, in a case where a concert date and time or a concert venue obtained from the ticket information is incorrect, the service provision control unit 402 determines that the user does not have an authority to receive the service (a qualification to enter the concert venue).

In a case where the user has an authority to receive provision of the service, the service provision control unit 402 determines that the acquired service eligibility certificate is valid.

The service provision control unit 402, in accordance with a business operation or a business type of itself (the service provider), determines the service eligibility certificate acquired from the user to be valid in a case where it is determined that "the service eligibility certificate is valid" in a predetermined item among first to fourth items.

For example, the service provision control unit 402 determines that the acquired service eligibility certificate is valid (accepts the service eligibility certificate) in a case where it is determined that the service eligibility certificate is valid in each of the four items. Alternatively, the service provision control unit 402 may determine the acquired service eligibility certificate to be valid in a case where it is determined that "the service eligibility certificate is valid" in two items of the first item and the fourth item.

In a case where the service eligibility certificate is not valid (step S207, No branch), the service provision control unit 402 notifies the user and the like that the service cannot be provided because the service eligibility certificate is invalid (step S203).

In a case where the service eligibility certificate is valid (step S207, Yes branch), the service provision control unit 402 provides the service to the user (step S208).

For example, the service provision control unit 402 notifies the user or employees of the service provider that the user can enter the concert venue.

It should be noted that a more detailed description regarding individual service provision will be omitted . This is because a detailed description regarding services specific to each service provider is different from the gist of the present disclosure.

The storage unit 403 is a means for storing information necessary for the operation of the business operator terminal 21.

### [Service Server]

A detailed description regarding a configuration and an operation of the service server 20 will be omitted. A basic configuration and an operation of the service server 20 can be the same as a configuration and an operation of the business operator terminal 21. The business operator terminal 21 communicates with the terminal 30 by short-range wireless communication such as Bluetooth (registered trademark) to acquire the credential certificate. On the other hand, the service server 20 communicates with the terminal 30 via a communication network such as the Internet to acquire the credential certificate. The service server 20 provides the service to the user in a case where the terminal 30 has succeeded in identity verification and verification of validity of the credential certificate (a service eligibility certificate) necessary for providing the service has succeeded.

### [Operation of System]

Subsequently, an operation of the information processing system according to the first example embodiment will be described.

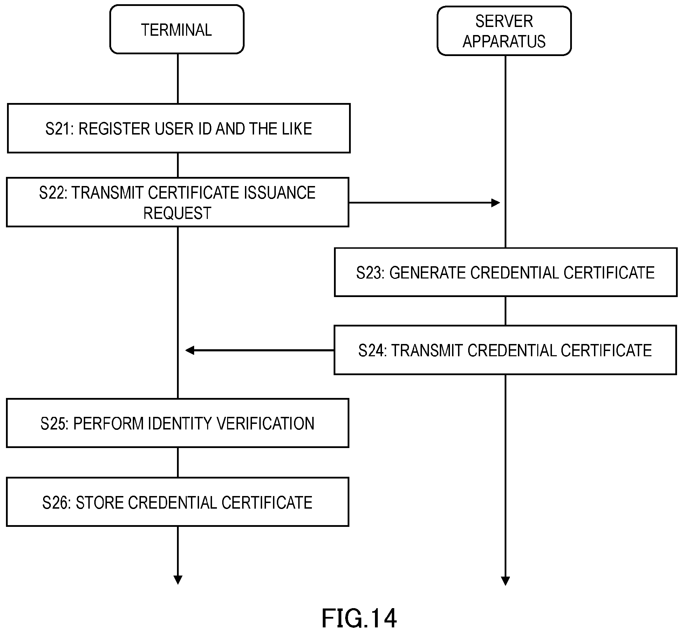

Fig. 14 is a sequence diagram for illustrating an example of an operation of the information processing system according to the example embodiment of the present disclosure. Referring to Fig. 14, an operation related to issuance of a certificate in the information processing system according to the first example embodiment will be described.

The terminal 30 generates a public key, a private key, and a user ID, and registers the user ID and the public key in a blockchain (step S21).

The terminal 30 transmits a certificate issuance request including the user ID to the server apparatus 10 of the certificate issuer (step S22).

The server apparatus 10 generates credential information of a user (a person to whom a certificate is issued of a credential certificate) and generates a credential certificate including the generated credential information (step S23). The server apparatus 10 generates a credential certificate including the user ID and an issuer ID and having a digital signature added thereto.

The server apparatus 10 transmits the generated credential certificate to the terminal 30 (step S24).

The terminal 30 performs identity verification (step S25).

In a case where a biometric information certificate is received, the terminal 30 performs identity verification using biometric information described in the received biometric information certificate and biometric information obtained by self-image capturing. In a case where a service eligibility certificate is received, the terminal 30 performs identity verification using biometric information described in a biometric information certificate stored internally and biometric information obtained by self-image capturing.

In a case where identity verification is successful, the terminal 30 stores the credential certificate in the digital wallet (step S26).

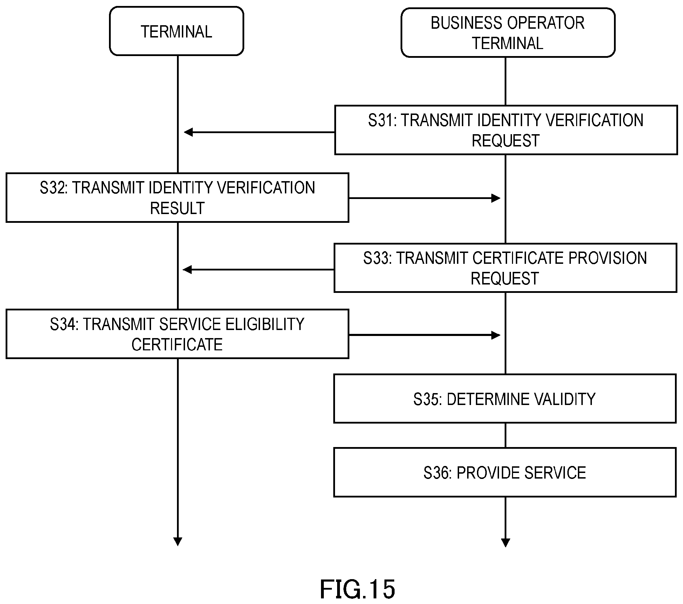

Fig. 15 is a sequence diagram for illustrating an example of an operation of the information processing system according to the example embodiment of the present disclosure. Referring to Fig. 15, an operation related to use of a certificate in the information processing system according to the first example embodiment will be described.

The apparatus of the service provider (in Fig. 15, the business operator terminal 21) transmits an identity verification request to the terminal 30 (step S31).

The terminal 30 performs identity verification using biometric information obtained from a biometric information certificate stored in the own apparatus and biometric information obtained by capturing an operator of the own apparatus, and transmits a result of the identity verification to the server apparatus 10 (step S32).

In a case where identity verification success is received, the business operator terminal 21 transmits, to the terminal 30, a certificate provision request that specifies a necessary service eligibility certificate (step S33).

The terminal 30 reads a service eligibility certificate specified by the service provider from the digital wallet and transmits the service eligibility certificate with a signature added thereto to the business operator terminal 21 (step S34).

The business operator terminal 21 determines validity of the acquired service eligibility certificate (step S35).

In a case where the service eligibility certificate is valid, the business operator terminal 21 provides the service to the user (step S36).

Subsequently, variations according to the first example embodiment will be described.

### <Variation 1>

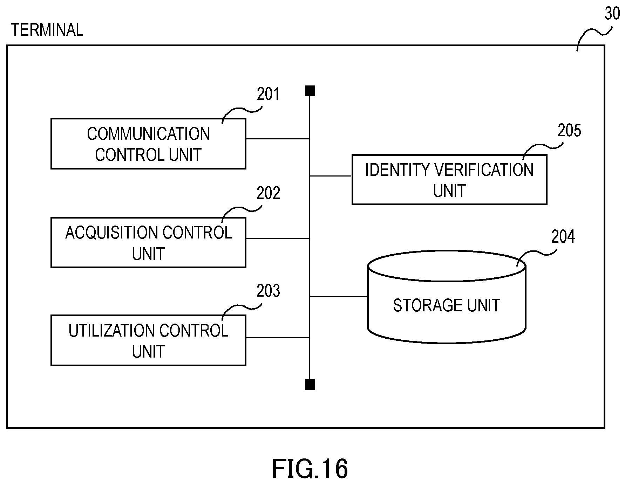

The terminal 30 may perform identity verification of the user at a time of initial use of the digital wallet and the like. In this case, the terminal 30 includes an identity verification unit 205 (see Fig. 16).

The identity verification unit 205 is a means for performing identity verification of an opener of a digital wallet. The identity verification unit 205 performs identity verification of the opener of the digital wallet using biometric information obtained from an identification document and biometric information of the opener who opens the digital wallet. More specifically, the identity verification unit 205 confirms that the opener of the digital wallet and a holder (a person to whom a certificate is issued) of an identification document issued by a public institution are the same person.

The identity verification unit 205 acquires biometric information from an identification document possessed by the user at a time of opening of the digital wallet (at a time of initial activation) or at an arbitrary timing. For example, the identity verification unit 205 acquires biometric information from an IC (Integrated Circuit) chip mounted on a My Number card or a passport. Alternatively, the identity verification unit 205 may instruct the user to capture the identification document and acquire biometric information from image data in which the identification document is captured.

Furthermore, the identity verification unit 205 acquires biometric information of the user. For example, the identity verification unit 205 acquires a face image by self-image capturing.

The identity verification unit 205 acquires biometric information from the identification document and acquires biometric information of a user who operates the own apparatus, and then performs identity verification using the two biometric information. In a case where identity verification is successful, the identity verification unit 205 treats a holder of the identification document and the user of the terminal 30 as the same person and permits use of the digital wallet by the user.

It should be noted that the terminal 30 may generate a biometric information certificate using biometric information acquired at a time of opening of the digital wallet and the like. In this case, the identity verification unit 205 transfers biometric information acquired from the identification document or biometric information obtained by self-image capturing to the acquisition control unit 202. The acquisition control unit 202 generates a biometric information certificate using the biometric information and stores the biometric information certificate in the digital wallet. In this manner, in a case where identity verification using the identification document is successful, the terminal 30 may generate a biometric information certificate using biometric information obtained from the identification document or biometric information obtained by self-image capturing.

Alternatively, the terminal 30 may transmit biometric information acquired from the identification document at a time of opening of the digital wallet and the like to the server apparatus 10 and request the server apparatus 10 to issue a biometric information certificate using the biometric information acquired from the identification document. Specifically, the terminal 30 transmits, to the server apparatus 10, a certificate issuance request including biometric information acquired from the identification document. The server apparatus 10 generates a biometric information certificate using biometric information obtained from the identification document in response to reception of the certificate issuance request. The server apparatus 10 transmits the generated biometric information certificate to the terminal 30. In this manner, instead of biometric information held by an organization such as a company or a university, a biometric information certificate may be issued using biometric information read by the terminal 30 from a public identification document or the like in response to an operation of the user.

### <Variation 2>

In the above example embodiment, a case where the terminal 30 stores biometric information described in a biometric information certificate acquired from a company or the like in the digital wallet has been described. However, the terminal 30 may store biometric information obtained from an identification document such as a My Number card or a passport in the digital wallet.

Upon receiving a biometric information certificate from the server apparatus 10 of a company or the like, the acquisition control unit 202 acquires biometric information (a face image) included in the biometric information certificate. The acquisition control unit 202 performs one-to-one matching using biometric information stored at a time of opening of the digital wallet (biometric information obtained from an identification document issued by a public institution) and biometric information obtained from the biometric information certificate.

In a case where the one-to-one matching is successful (in a case where the two biometric information are substantially the same), the acquisition control unit 202 stores the biometric information certificate in the digital wallet.

Alternatively, in a case where execution of identity verification is requested by the service provider, the utilization control unit 203 of the terminal 30 may perform identity verification using biometric information obtained from the identification document (biometric information stored at a time of opening of the digital wallet).

### <Variation 3>

The server apparatus 10 that has received a certificate issuance request of a biometric information certificate may perform identity verification of the user. In a case where issuance of a biometric information certificate is requested, the terminal 30 transmits, for example, to the server apparatus 10, a certificate issuance request including image data in which an identification document possessed by the user is captured.

The certificate issuance unit 302 of the server apparatus 10 extracts biometric information from image data in which the identification document is captured. The certificate issuance unit 302 performs one-to-one matching using the extracted biometric information and biometric information managed in an internal database (biometric information of employees and the like specified by an employee number and the like).

In a case where the one-to-one matching is successful (in a case where the two biometric information are substantially the same), the certificate issuance unit 302 issues a biometric information certificate using either one of the two biometric information.

### <Variation 4>

The service provider may acquire a biometric information certificate from the terminal 30 in a case where the service is provided to the user. For example, a ticket sales operator may acquire a biometric information certificate in a case where a ticket is sold.

In this case, the service server 20 of the ticket sales operator specifies a biometric information certificate as a certificate necessary for providing the service and transmits a certificate provision request to the terminal 30.

The service server 20 acquires a biometric information certificate from the terminal 30 by transmitting a certificate provision request. The service server 20 confirms validity of the acquired biometric information certificate. After confirming validity of the biometric information certificate, the service server 20 acquires biometric information (for example, a face image) from the certificate. The service server 20 stores the acquired face image. For example, the service server 20 of a ticket sales operator stores ticket information and a face image in association with each other in an account of the user.

The service server 20 can provide a service to the user by utilizing the acquired biometric information. For example, the service server 20 may issue a ticket with a face image added thereto.

In addition, in a case where a ticket sales operator acts as a certificate issuer of a ticket certificate, the service server 20 operates as the server apparatus 10. In this case, the service server 20 (the server apparatus 10) may issue, to the user, a ticket certificate (a service eligibility certificate) including a face image of a ticket purchaser in credential information.

In a case where a ticket certificate with a face image (a service eligibility certificate including face information) is acquired, the acquisition control unit 202 of the terminal 30 may perform identity verification using biometric information obtained from the ticket certificate with face information and biometric information obtained by self-image capturing. In a case where identity verification is successful, the acquisition control unit 202 may store the ticket certificate with face information in the digital wallet.

Alternatively, the user may provide a biometric information certificate to the ticket sales operator after acquiring a ticket certificate from the ticket sales operator (the server apparatus 10 of the operator). The service server 20 may store biometric information included in the biometric information certificate in an account after succeeding in verification of validity of the acquired biometric information certificate.

### <Variation 5>

In the above example embodiment, it has been described that a result of identity verification is provided from the user to the service provider by a communication means such as the Internet or Bluetooth (registered trademark). However, the result of identity verification may be provided from the user to the service provider (the business operator terminal 21) by display on a screen by the terminal 30.

For example, in a case where a service is provided to the user, employees and the like of the service provider inform the user that identity verification is necessary to receive the service (inform verbally). The user operates the terminal 30 to perform a predetermined operation (for example, pressing of an identity verification button). The terminal 30 performs the identity verification described above in response to the operation of the user.

The terminal 30 displays a result of identity verification (identity verification success, identity verification failure). Employees and the like of the service provider confirm the displayed result of identity verification and determine whether to continue providing the service to the user.

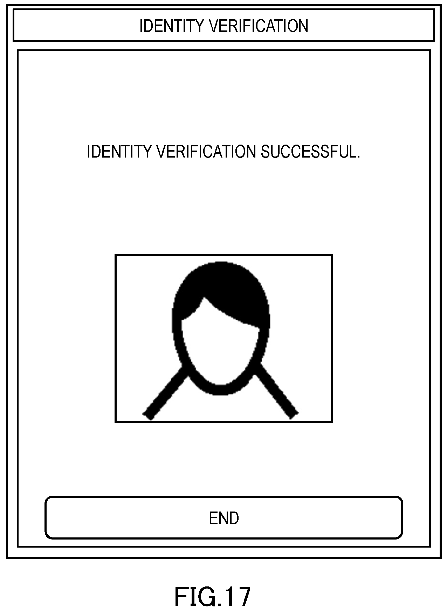

Alternatively, in a case where identity verification is successful, the terminal 30 may display biometric information (a face image) used for identity verification together with the result of identity verification (see Fig. 17). At this time, the terminal 30 may employ a screenshot prevention/detection mechanism such as a countdown timer and the like. By such an operation of the terminal 30, it is possible to prevent fraud in which a user who has succeeded in identity verification hands the terminal 30 to another person and the other person uses the terminal 30.

### <Variation 6>

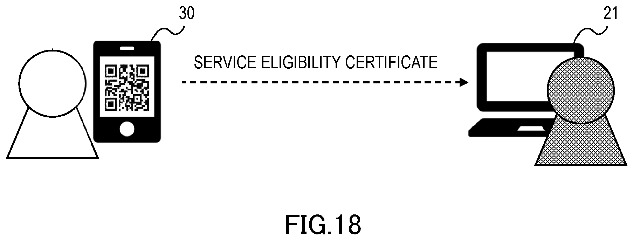

Not only the result of identity verification but also the service eligibility certificate (credential certificate) may be provided from the user to the service provider by a means different from a communication means such as the Internet or Bluetooth (registered trademark). For example, the service eligibility certificate may be provided from the user (the terminal 30) to the service provider (the business operator terminal 21) using a means such as a two-dimensional barcode (see Fig. 18).

For example, in a case where identity verification of the user is success, employees and the like of the service provider inform the user of a certificate necessary for receiving the service. The user operates the terminal 30 to select the informed service eligibility certificate (ticket certificate). The terminal 30 adds a signature to the selected service eligibility certificate and converts the service eligibility certificate with the signature added thereto into a two-dimensional barcode. The terminal 30 displays the two-dimensional barcode.

Employees and the like of the service provider operate the business operator terminal 21 to read the two-dimensional barcode and acquire the service eligibility certificate by decoding the two-dimensional barcode.

### <Variation 7>

The terminal 30 of the user may determine validity of a biometric information certificate (a biometric information certificate stored in the digital wallet) from which biometric information is read in a case where an identity verification request is received from the apparatus of the service provider (the service server 20, the business operator terminal 21).

The terminal 30 of the user may perform determination such as that a validity period of a biometric information certificate used for identity verification has not elapsed and that the biometric information certificate is not registered in a revocation list. In a case where the biometric information certificate is valid, the terminal 30 may read biometric information from the certificate and perform identity verification.

In this manner, the utilization control unit 203 of the terminal 30 may verify validity of the biometric information certificate stored in the digital wallet, and may perform identity verification in a case where the stored biometric information certificate is valid.

### <Variation 8>

In the above example embodiment, a case where the service provider verifies validity of the service eligibility certificate acquired from the user has been described. Here, all or part of verification of validity of the service eligibility certificate may be performed in the terminal 30.

For example, among the four verification items, the terminal 30 may confirm that the service eligibility certificate specified by the service provider is not registered in a revocation list and that a validity period of the service eligibility certificate has not elapsed. In a case where the terminal 30 fails in these verifications, the terminal 30 may notify the service provider (the business operator terminal 21 or the service server 20) that the service eligibility certificate specified by the service provider cannot be provided. Specifically, in a case where the terminal 30 fails in the above verification, the terminal 30 may transmit a negative response to the certificate provision request.

In this manner, the utilization control unit 203 may verify validity of the service eligibility certificate stored in the digital wallet, and may provide the service eligibility certificate to the service provider in a case where the stored service eligibility certificate is valid.

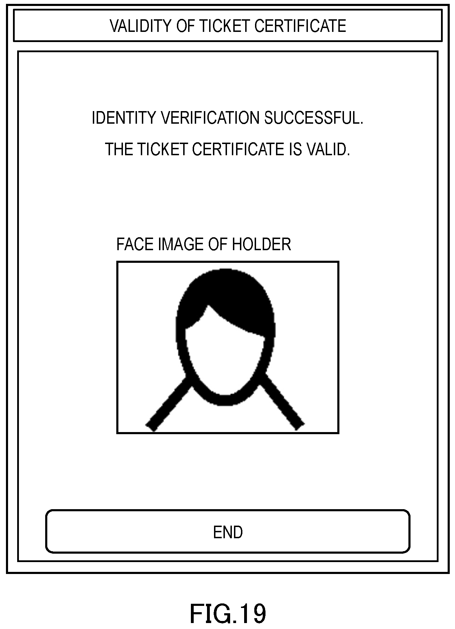

Alternatively, the utilization control unit 203 may notify the service provider of a result of determination of validity of the service eligibility certificate (ticket certificate) (the service eligibility certificate is valid, invalid). The utilization control unit 203 may notify the service provider of the determination result using a short-range wireless communication means such as Bluetooth (registered trademark) and the like. Alternatively, the utilization control unit 203 may notify the service provider of the determination result of validity of the service eligibility certificate by screen display and the like. For example, the utilization control unit 203 may perform a display as shown in Fig. 19. The user presents the terminal 30 on which the display as shown in Fig. 19 is performed to employees and the like of the service provider. In this manner, the terminal 30 may determine validity of the service eligibility certificate and notify the service provider of the result. In addition, as shown in Fig. 19, the terminal 30 may notify the service provider of the result of identity verification and the result of determination of validity of the service eligibility certificate at the same time.

### <Variation 9>

In the above example embodiment, a case where the service provider (the service server 20, the business operator terminal 21) requests the terminal 30 to perform identity verification and thereafter requests the terminal 30 to provide the service eligibility certificate has been described. However, the apparatus of the service provider (the service server 20, the business operator terminal 21) may request the terminal 30 to submit a result of identity verification and the service eligibility certificate at the same time.

Specifically, the business operator terminal 21 and the like transmit a certificate provision request to the terminal 30 without transmitting an identity verification request. The terminal 30 that has received the certificate provision request performs identity verification of the user. In a case where identity verification is successful, the terminal 30 transmits the service eligibility certificate specified by the service provider to the business operator terminal 21 and the like.

In this manner, the terminal 30 may perform identity verification using biometric information obtained from the biometric information certificate even in a case where identity verification is not explicitly requested by the service provider (the service server 20, the business operator terminal 21). In a case where identity verification is successful, the terminal 30 provides the service eligibility certificate specified by the service provider to the service provider.

### <Variation 10>

In the above example embodiment, it has been described that identity verification of the user is performed in the terminal 30. However, the identity verification may be performed in the apparatus of the service provider (the service server 20, the business operator terminal 21).

In this case, the business operator terminal 21 and the like transmit a "biometric information provision request" to the terminal 30 instead of an identity verification request.

Upon receiving the biometric information provision request, the terminal 30 transmits biometric information obtained from the biometric information certificate and biometric information obtained by self-image capturing of the user to the business operator terminal 21 and the like.

Alternatively, the terminal 30 may transmit the biometric information certificate stored in the digital wallet and biometric information obtained by self-image capturing to the business operator terminal 21 and the like.

The business operator terminal 21 and the like perform identity verification using the two pieces of biometric information obtained, and in a case where identity verification is successful, request the terminal 30 to provide the service eligibility certificate.

Alternatively, in a case where a service is provided by the business operator terminal 21, the business operator terminal 21 may capture the user (a holder of the terminal 30) to acquire biometric information. In this case, the terminal 30 only needs to transmit the biometric information certificate stored in the digital wallet (or biometric information obtained from the certificate) to the business operator terminal 21 in response to the biometric information provision request received from the business operator terminal 21.

The business operator terminal 21 may perform identity verification using a face image obtained by capturing the user in front thereof and a face image of the biometric information certificate acquired from the terminal 30. After identity verification is successful, the business operator terminal 21 transmits a certificate provision request to the terminal 30.

Alternatively, the terminal 30 may display biometric information (a face image) described in the biometric information certificate in response to reception of the biometric information provision request. Employees and the like of the service provider may perform identity verification by comparing the face image displayed on a display of the terminal 30 with a face of the user in front thereof.

### <Variation 11>

The acquisition control unit 202 of the terminal 30 may determine validity of the biometric information certificate acquired in a case where the biometric information certificate is acquired from the certificate issuer. The acquisition control unit 202 may store the acquired biometric information certificate in the digital wallet in a case where the acquired biometric information certificate is valid. For example, in a case where a validity period of the acquired biometric information certificate has not elapsed and the biometric information certificate is not registered in a revocation list, the acquisition control unit 202 may accept the biometric information certificate received from the server apparatus 10.

As described above, the terminal 30 according to the first example embodiment performs identity verification using biometric information certified by the biometric information certificate and biometric information of a user (an operator) of the terminal 30 in a case where the biometric information certificate is acquired. In a case where identity verification is successful, the terminal 30 accepts the biometric information certificate acquired from the certificate issuer. As a result, even in a case where the user operates the own terminal 30 to request issuance of a biometric information certificate of another person and acquires the biometric information certificate of the other person, the biometric information certificate of the other person is not stored in the terminal 30. That is, since biometric information of the user of the terminal 30 and biometric information of the biometric information certificate of another person are different from each other, fraud in which the user stores the biometric information certificate of another person in the own digital wallet is prevented.

In addition, the terminal 30 performs identity verification using a biometric information certificate acquired in advance in a case where the service eligibility certificate is acquired from the certificate issuer. By the identity verification, identity of the user who has received issuance of the biometric information certificate and the user of the terminal 30 is confirmed. As a result, fraud in which the user borrows another person's terminal 30 and stores a certificate (a service eligibility certificate) of a ticket purchased by the user in a digital wallet of the borrowed terminal 30 is prevented.

Furthermore, the terminal 30 performs identity verification using the biometric information certificate stored in the digital wallet in a case where the user receives provision of a service. In a case where identity verification is successful, the terminal 30 provides the service eligibility certificate to the service provider. As a result, it is prevented that a user who does not have eligibility to receive a service borrows a terminal 30 in which a service eligibility certificate of another person is stored and receives provision of the service from the service provider. In this manner, the terminal 30 prevents unauthorized use (impersonation) of the service eligibility certificate stored in the digital wallet by performing identity verification.

### [Second Example Embodiment]

Next, a second example embodiment will be described in detail with reference to drawings.

In the second example embodiment, omission of identity verification using biometric information obtained from a biometric information certificate will be described. The terminal 30 according to the second example embodiment provides a simplified identity verification means (an identity verification alternative means) that replaces identity verification using a biometric information certificate at a time of presenting a service eligibility certificate.

It should be noted that a configuration of an authentication system according to the second example embodiment can be the same as that of the first example embodiment, and thus description corresponding to Fig. 3 will be omitted. In addition, since processing configurations of the server apparatus 10, the business operator terminal 21, the terminal 30, and the like according to the second example embodiment can be the same as those of the first example embodiment, description thereof will be omitted.

Hereinafter, differences between the first example embodiment and the second example embodiment will be mainly described.

In a case where identity verification is requested at high frequency from a service provider, the terminal 30 may perform another simplified identity verification instead of performing identity verification (regular identity verification) using a biometric information certificate in response to the request. The terminal 30 may omit regular identity verification using biometric information by performing the simplified identity verification.

As the simplified identity verification, identity verification using a password is exemplified. For example, a case is considered in which a password necessary for unlocking the terminal 30 is set in the terminal 30.

In a case where identity verification is requested from the service provider, the utilization control unit 203 of the terminal 30 determines whether a predetermined condition (an identity verification omission condition) for omitting regular identity verification is satisfied.

For example, as the identity verification omission condition, "after successful regular identity verification, an identity verification request is received from the same service provider within a predetermined period" is exemplified. For example, for one hour after the identity verification is successful, regular identity verification can be omitted with respect to an identity verification request from the same service provider.

It should be noted that the apparatus of the service provider (the service server 20, the business operator terminal 21) according to the second example embodiment notifies the terminal 30 of a business operator ID for identifying the service provider at a time of an identity verification request or a certificate provision request. The terminal 30 determines whether identity verification has been requested from the same service provider using the business operator ID.

In a case where identity verification is requested by the service provider, the utilization control unit 203 of the terminal 30 performs regular identity verification, and in a case where the identity verification is successful, notifies the service provider to that effect. Subsequently, in a case where identity verification is requested by the same service provider before a predetermined time elapses from identity verification success of the regular identity verification, the utilization control unit 203 omits the regular identity verification.

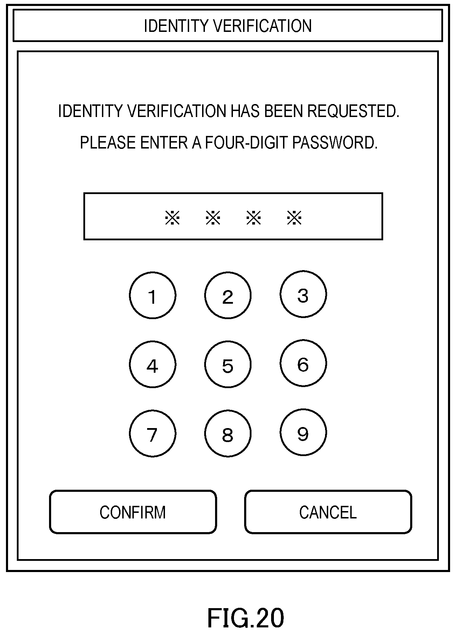

The utilization control unit 203 performs another simplified identity verification instead of the regular identity verification. For example, the utilization control unit 203 performs identity verification by input of a password (see Fig. 20). Upon password authentication using a password being successful, the utilization control unit 203 notifies the service provider of identity verification success.

In this manner, the utilization control unit 203 includes a function as a verification means for performing first identity verification using biometric information obtained from the biometric information certificate in response to a request for identity verification from the service provider and notifying the service provider of a result of the first identity verification. The utilization control unit 203 (verification means) performs second identity verification different from the first identity verification in a case where identity verification is requested again from the service provider, and notifies the service provider of a result of the second identity verification.

The utilization control unit 203 can perform the second identity verification instead of the first identity verification in a case where a predetermined condition is satisfied. For example, the utilization control unit 203 may perform the second identity verification instead of the first identity verification in a case where execution of identity verification is requested again from the service provider before a predetermined time elapses from identity verification success of the first identity verification.

Alternatively, as the simplified identity verification, identity verification using a biometric authentication device included in the terminal 30 is exemplified. For example, a fingerprint reading device can be used as another simplified identity verification. For example, fingerprint authentication may be applied to unlocking of the terminal 30. In this case, similarly to a case where a password is set in the terminal 30, the utilization control unit 203 performs identity verification by fingerprint authentication in a case where identity verification is requested by the same service provider before a predetermined time elapses from identity verification success of regular identity verification using the biometric information certificate.

It should be noted that various conditions can be set as conditions (identity verification omission conditions) for the utilization control unit 203 to perform another simplified identity verification. For example, as described above, another simplified identity verification may be performed in a case where identity verification is requested before a predetermined time elapses (for example, before one hour elapses) from identity verification success using the biometric information certificate.

Alternatively, a period during which regular identity verification can be omitted may be set in accordance with the number of times identity verification using a biometric information certificate is successful within a predetermined period. For example, in a case where identity verification using a biometric information certificate is successful three or more times within three hours, the utilization control unit 203 may perform simplified identity verification for one hour from identity verification success of a third identity verification (regular identity verification is omitted for one hour).

Alternatively, the utilization control unit 203 may change, in accordance with the service provider, the number of times identity verification using a biometric information certificate is successful within the predetermined period for omitting regular identity verification. For example, the number of times legitimate identity verification can be omitted for service A may be set to "3," and the number of times legitimate identity verification can be omitted for service B may be set to "5."

In this manner, the utilization control unit 203 may perform second identity verification instead of first identity verification in a second period determined in accordance with the number of times first identity verification is successful in a first period. In this case, for each of a plurality of the service providers, the number of times first identity verification is successful in the first period for setting the second period may be defined.

Alternatively, a condition (an identity verification omission condition) for enabling omission of regular identity verification may be notified to the terminal 30 from the service provider. For example, the business operator terminal 21 may notify the terminal 30 of the identity verification omission condition in a case where an identity verification request is transmitted to the terminal 30.

### <Specific Example>

An operation of the information processing system according to the second example embodiment will be specifically described.

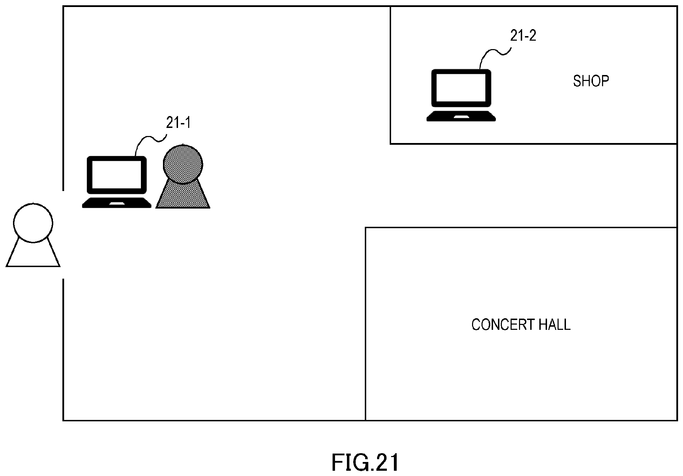

For example, as shown in Fig. 21, a business operator terminal 21-1 is installed at an entrance of a concert venue. In addition, a business operator terminal 21-2 is installed in a shop in the concert venue.

The user provides a ticket certificate (a service eligibility certificate) to the business operator terminal 21-1 in a case where the user enters the concert venue. In addition, the user purchases a product at the shop and provides electronic money (an electronic money account ID) stored in the digital wallet and credit card information to the business operator terminal 21-2.

The user performs identity verification in response to requests from the business operator terminals 21-1 and 21-2 in a case where the user enters the concert venue and in a case where the user purchases a product at the shop. It should be noted that the same business operator ID is set in the business operator terminals 21-1 and 21-2.

In a case where the user first enters the concert venue, the terminal 30 performs regular identity verification (performs identity verification using the biometric information certificate). In a case where the user purchases a product at the shop, in a case where the identity verification omission condition is satisfied, the terminal 30 omits regular identity verification and performs simplified identity verification (for example, password authentication).

Alternatively, in a case where the user leaves the concert venue and re-enters the concert venue, the user resubmits a ticket certificate to the business operator terminal 21-1. In that case, in a case where an identity verification omission condition is satisfied, the terminal 30 omits regular identity verification and performs another simplified identity verification.

Next, variations according to the second example embodiment will be described.

<Variation 1>

The terminal 30 may omit execution of simplified identity verification in a case where an identity verification omission condition is satisfied. Alternatively, a condition for omitting simplified identity verification (an identity verification complete omission condition) may be set in the terminal 30.

For example, simplified identity verification may also be omitted for an extremely short period (for example, three minutes) after the identity verification is successful. Alternatively, the simplified identity verification may be omitted for a predetermined period after the simplified identity verification is performed.

### <Variation 2>

A condition using position information of the terminal 30 may be set in an identity verification omission condition (or an identity verification complete omission condition). For example, in a case where identity verification is requested by the same service provider within a predetermined range centered on a place (position) where regular identity verification has succeeded, the terminal 30 may substitute identity verification from a second time onward with simplified identity verification.

Alternatively, an identity verification omission condition may be configured by combining position information of the terminal 30 and a temporal element of regular identity verification. For example, the terminal 30 may omit regular identity verification and perform simplified identity verification within a predetermined range and for a predetermined period after successful regular identity verification.

An identity verification omission condition is determined according to a business content, a business form, a content of a service eligibility certificate handled, and the like of the service provider.

### <Variation 3>

The above-described regular identity verification (first identity verification) initially performed may be performed by a combination of a plurality of authentication means. For example, regular identity verification may be performed by a combination of biometric authentication using a biometric information certificate and password authentication using a password. That is, the initially performed regular identity verification may be performed by multimodal authentication combining two or more authentication methods. In this case, simplified identity verification (second identity verification) performed second and thereafter may be performed by a single authentication method (single-modal authentication) such as biometric authentication using a biometric information certificate or password authentication. In addition, in a case where regular identity verification is performed by multimodal authentication, simplified identity verification may be omitted. In addition, in a case where regular identity verification is performed by single-modal authentication, simplified identity verification may be omitted.

### <Variation 4>

In the second example embodiment, a case has been described in which regular identity verification is performed first, and thereafter, simplified identity verification is performed in a case where a predetermined condition is satisfied. However, the regular identity verification and the simplified identity verification may be performed in a reverse order. That is, depending on a service or a business form provided by a service provider, there is also a case where it is preferable to perform simplified identity verification first and thereafter perform regular identity verification. In such a case, the terminal 30 may perform simplified identity verification first and thereafter perform regular identity verification.

Alternatively, the apparatus of the service provider (the service server 20, the business operator terminal 21) may notify the terminal 30 of an execution order of regular identity verification and simplified identity verification. **In** that case, the apparatus of the service provider may also notify the terminal 30 of a condition for switching a method of identity verification.

As described above, the terminal 30 according to the second example embodiment performs regular identity verification using biometric information acquired in advance in a case where identity verification is requested from the service provider. The terminal 30 notifies the service provider of a result of the regular identity verification. The terminal 30 performs simplified identity verification different from the regular identity verification in a case where identity verification is requested again from the service provider and a predetermined condition is satisfied. The terminal 30 notifies the service provider of a result of the simplified identity verification. As a result, even in a case where identity verification is repeatedly requested from the same service provider, it is sufficient for the user to perform simplified identity verification. That is, a burden on the user who receives a service requiring identity verification is reduced.

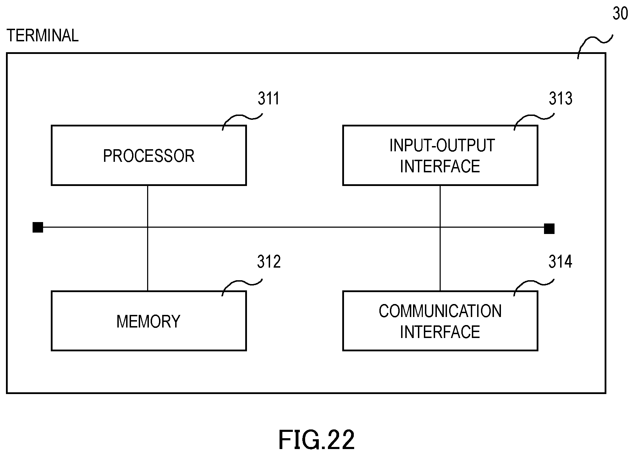

Next, a hardware configuration of an individual apparatus that constitutes the information processing system will be described. Fig. 22 is a diagram illustrating an example of a hardware configuration of the terminal 30.

The terminal 30 can be configured by an information processing apparatus (a so-called computer), and includes a configuration illustrated in Fig. 22. For example, the terminal 30 includes a processor 311, a memory 312, an input-output interface 313, a communication interface 314, and the like. The above components such as the processor 311 are connected by an internal bus and the like and are configured to be capable of communicating with each other.

However, the configuration illustrated in Fig. 22 is not intended to limit the hardware configuration of the terminal 30. The terminal 30 may include hardware not illustrated or may be configured without the input-output interface 313 if desired. In addition, the number of components, such as the number of processors 311, included in the terminal 30 is not limited to the example illustrated in Fig. 22. For example, a plurality of processors 311 may be included in the terminal 30.

For example, the processor 311 is a programmable device such as a CPU (Central Processing Unit), an MPU (Micro Processing Unit), or a DSP (Digital Signal Processor). Alternatively, the processor 311 may be a device such as an FPGA (Field Programmable Gate Array) or an ASIC (Application Specific Integrated Circuit). The processor 311 executes various kinds of programs including an operating system (OS).

The memory 312 is a RAM (Random Access Memory), a ROM (Read-Only Memory), an HDD (Hard Disk Drive), an SSD (Solid State Drive), and the like. The memory 312 stores an OS program, an application program, and various kinds of data.

The input-output interface 313 is an interface for a display apparatus and an input apparatus not illustrated. The display apparatus is, for example, a liquid crystal display or the like. For example, the input apparatus is an apparatus that receives user operations, and examples of the input apparatus include a keyboard and a mouse.

The communication interface 314 is a circuit, a module, and so on for performing communication with other apparatuses. For example, the communication interface 314 includes a NIC (Network Interface Card), and the like..

The function of the terminal 30 is realized by various kinds of processing modules. The processing modules are realized, for example, by causing the processor 311 to execute a program stored in the memory 312. In addition, this program can be recorded in a computer-readable storage medium. The storage medium may be a non-transient (nontransitory) storage medium, such as a semiconductor memory, a hard disk, a magnetic recording medium, or an optical recording medium. That is, the present invention can be embodied as a computer program product. In addition, the above program may be updated by downloading a program via a network or by using a storage medium in which a program is stored. In addition, the above processing modules may be realized by semiconductor chips.

It should be noted that the server apparatus 10, the service server 20, the business operator terminal 21, and the like can also be configured by information processing apparatuses in the same manner as the terminal 30, and since the specific hardware configurations of the server apparatus 10, the service server 20, the business operator terminal 21, and the like are not different from that of the terminal 30, a detailed description thereof will be omitted.

Similarly, the terminal 30, which is an information processing apparatus, includes a computer and can realize the functions of the terminal 30 by causing the computer to execute a program. In addition, the terminal 30 executes a terminal control method by using this program. Similarly, the server apparatus 10 includes a computer and can realize its functions by causing the computer to execute a program. In addition, the server apparatus 10 executes a control method of the server apparatus 10 by using this program.

### [Variations]

It should be noted that a configuration, an operation, and the like of the information processing system described in the above example embodiments are examples and are not intended to limit a configuration of the system and the like.

In the above example embodiments, a case has been described in which the server apparatus 10 of the certificate issuer issues a credential certificate that does not require a certificate authority for verification of the certificate. However, the server apparatus 10 may issue a certificate that requires a certificate authority (a certificate based on a public key infrastructure).

In the above example embodiments, description of an operation and the like of the information processing system has been mainly provided by taking a biometric information certificate related to a "face" as an example. It is natural that the information processing system can handle a biometric information certificate related to biometric information other than a face. For example, the terminal 30 may acquire a biometric information certificate related to biometric information such as a fingerprint or a voiceprint (a fingerprint VCs, a voiceprint VCs) and store the same in the digital wallet. For example, the terminal 30 may acquire a biometric information certificate related to biometric information such as a fingerprint or a voiceprint (a fingerprint VCs, a voiceprint VCs) and store the same in the digital wallet.

The terminal 30 may acquire biometric information certificates related to the same biometric information from different certificate issuers and store a plurality of biometric information certificates that certify the same biometric information in the digital wallet. For example, the terminal 30 may acquire biometric information certificates related to a face from each of certificate issuers A and B.

Alternatively, the terminal 30 may acquire biometric information certificates related to different types of biometric information from the same certificate issuer and store biometric information certificates related to different biometric information acquired from the same certificate issuer in the digital wallet. For example, the terminal 30 may acquire a biometric information certificate related to a face and a biometric information certificate related to a fingerprint from the certificate issuer A.

The apparatus of the service provider (the service server 20, the business operator terminal 21) may specify a biometric information certificate used by the terminal 30 for identity verification. For example, the business operator terminal 21 and the like may instruct to perform identity verification using a biometric information certificate related to a face (face VCs). In this case, the business operator terminal 21 and the like may transmit an identity verification request including a type of biometric information to the terminal 30.

The terminal 30 may notify the apparatus of the service provider (the service server 20, the business operator terminal 21) of information (detailed information) related to a biometric information certificate used for identity verification. For example, the terminal 30 may transmit, to the business operator terminal 21 and the like, information related to a type of biometric information certified by the biometric information certificate, an issuer of the biometric information certificate, and the like together with an identity verification result. The business operator terminal 21 may refuse provision of a service to a user depending on a type of information used for identity verification or an issuer of the biometric information certificate, even in a case where the identity verification result is identity verification success. The business operator terminal 21 may refuse a result of identity verification that does not satisfy a security policy and the like of the business operator. For example, in a case where a service provider such as a financial institution or an insurance company provides a service related to account opening or insurance application, identity verification using a biometric information certificate issued by a public institution such as a passport or a My Number card is required instead of a biometric information certificate issued by a private business operator. **In** this manner, a condition related to an issuer of the biometric information certificate may be set depending on a content of a service provided by the service provider to the user and the like.

The terminal 30 may execute control according to an issuer of a biometric information certificate in a case where a service eligibility certificate is acquired from a certificate issuer or provided to a service provider. For example, the terminal 30 may prohibit provision of a service eligibility certificate (ticket certificate) to the service provider unless identity verification using a biometric information certificate issued by a trusted issuer is successful.

**In** the above example embodiments, use and utilization of a biometric information certificate and a service eligibility certificate have been mainly described. **In** the information processing system according to the present disclosure, an identification certificate can also be utilized similarly to the service eligibility certificate. For example, in a case where the terminal 30 receives an identification document from a certificate issuer, the terminal 30 may perform identity verification using a biometric information certificate. Similarly to the service eligibility certificate, the terminal 30 may store the acquired identification document in the digital wallet in a case where identity verification using a biometric information certificate is successful.

Alternatively, the terminal 30 may perform identity verification using a biometric information certificate in a case where the identification document is provided to the service provider. **In** this case as well, similarly to the service eligibility certificate, the terminal 30 may provide the identification document stored in the digital wallet to the service provider in a case where identity verification using a biometric information certificate is successful.

The terminal 30 may obtain consent of the user related to provision of the service eligibility certificate before providing the service eligibility certificate to the service provider. At that time, the terminal 30 may obtain consent related to submission of the service eligibility certificate while explicitly indicating the service eligibility certificate requested to be provided.

In the above example embodiment, a case has been described in which the utilization control unit 203 of the terminal 30 selects the service eligibility certificate specified by the service provider. However, the user may operate the terminal 30 to select the service eligibility certificate specified by the service provider. For example, in a case where a service eligibility certificate required for receiving a necessary service is orally communicated from an employee and the like of the service provider, the utilization control unit 203 may display a list of service eligibility certificates stored in the digital wallet in response to an operation of the user. The utilization control unit 203 may realize selection of the service eligibility certificate by the user by displaying the list of service eligibility certificates.

The biometric information certificate may include not only biometric information certified by the certificate issuer but also personal information of a certificate holder (for example, basic information such as a name, a gender, a date of birth, an address, and the like).

In the above example embodiments, a case has been described in which the user (the terminal 30) requests issuance of the biometric information certificate from an organization such as a company or a university. However, the terminal 30 may request issuance of the biometric information certificate from the server apparatus 10 of a public institution that stores biometric information of the user. Alternatively, the terminal 30 may request issuance of the biometric information certificate from a public institution in a case where the biometric information certificate cannot be acquired from a company and the like.

The service provider may request only execution of identity verification to the terminal 30. For example, in a case where it is sufficient to confirm that the user belongs to a company or a university in providing a service to the user, the service provider may request only execution of identity verification to the terminal 30. The service provider may determine that a user who has succeeded in identity verification belongs to some organization and may provide the service.

The terminal 30 may, in transmitting the certificate issuance request to the server apparatus 10 of the certificate issuer, add a signature to information included in the certificate issuance request using a private key corresponding to a public key registered in a blockchain. The certificate issuance unit 302 of the server apparatus 10 may set successful verification of the signature as a condition for issuance of the certificate (credential certificate).

The acquisition control unit 202 of the terminal 30 may notify the user of a fact that the credential certificate has been issued in a case where the credential certificate is acquired from the server apparatus 10. In addition, the acquisition control unit 202 may verify a signature attached to the credential certificate acquired from the certificate issuer. In this case, the acquisition control unit 202 acquires a public key corresponding to an issuer ID described in the credential certificate from the blockchain. The acquisition control unit 202 verifies the signature attached to the credential certificate using the acquired public key. The acquisition control unit 202 may set successful verification of the signature as a condition for storing the credential certificate in the digital wallet.

Some functions of the terminal 30 may be implemented in another apparatus, a device, and the like. More specifically, it is sufficient that the "acquisition control unit (acquisition control means)", the "utilization control unit (utilization control means)", and the like described above are implemented in any apparatus included in the system.

While the data exchange between each apparatus (for example, the server apparatus 10, the terminal 30) is not limited to any particular mode, data exchanged between these apparatuses may be encrypted. It is desirable that personal information of a user, and so on are transmitted and received between these apparatuses and encrypted data is transmitted and received in order to properly protect this information.

In the flowcharts and sequence diagrams used in the above description, a plurality of steps (processes) are sequentially described. However, the order of the execution of the steps performed in the individual example embodiment is not limited to the described order. In the individual example embodiment, the order of the illustrated steps may be changed to the extent that a problem is not caused on the content of the individual example embodiment. For example, individual processes may be executed in parallel.

The above example embodiments have been described in detail to facilitate the understanding of the present application disclosed and not to mean that all the configurations described above are needed. In addition, if a plurality of example embodiments have been described, each of the example embodiments may be used individually or a plurality of example embodiments may be used in combination. For example, part of a configuration according to one example embodiment may be replaced by a configuration according to another example embodiment. For example, a configuration according to one example embodiment may be added to a configuration according to another example embodiment. In addition, addition, deletion, or replacement is possible between part of a configuration according to one example embodiment and another configuration.

The industrial applicability of the present invention has been made apparent by the above description. That is, the present invention is suitably applicable, for example, to an information processing system including a service provider that provides a service to a user using a certificate stored in a digital wallet, and the like.

A part or the entirety of the example embodiments described above may be described as in the following supplementary notes, but is not limited to the followings.

### [Supplementary Note 1]

A terminal including:
an acquisition means that acquires, from a certificate issuer that holds biometric information of a user, a biometric information certificate that certifies biometric information of a person to whom a certificate is issued and includes biometric information of the person to whom the certificate is issued;
a verification means that performs identity verification using biometric information obtained from the acquired biometric information certificate and biometric information of the user; and
a storage means that stores the acquired biometric information certificate in a case where the identity verification is determined to be successful.

### [Supplementary Note 2]

The terminal according to supplementary note 1, wherein the verification means performs the identity verification using the biometric information obtained from the acquired biometric information certificate and biometric information obtained by capturing the user.

### [Supplementary Note 3]

The terminal according to supplementary note 2, wherein the acquisition means acquires the biometric information certificate by transmitting, to the certificate issuer, a certificate issuance request including information for identifying the person to whom the biometric information certificate is issued.

### [Supplementary Note 4]

The terminal according to supplementary note 3, wherein the acquisition means transmits, to the certificate issuer, the certificate issuance request including a type of biometric information to be certified by the biometric information certificate.

### [Supplementary Note 5]

The terminal according to supplementary note 4, wherein the acquisition means acquires the biometric information certificate as a credential certificate from the certificate issuer.

### [Supplementary Note 6]

The terminal according to any one of supplementary notes 1 to 5, wherein the acquisition means acquires the biometric information certificate related to a face of a person.

### [Supplementary Note 7]

The terminal according to any one of supplementary notes 1 to 5, wherein the storage means stores the acquired biometric information certificate in a digital wallet.

### [Supplementary Note 8]

The terminal according to supplementary note 7, wherein the acquisition means stores, in a case where the acquired biometric information certificate is valid, the acquired biometric information certificate in the digital wallet.

### [Supplementary Note 9]

The terminal according to supplementary note 8, wherein the biometric information certificate is generated using biometric information obtained from a public identification document of the person to whom the certificate is issued.

### [Supplementary Note 10]

A system including:
a server apparatus that is managed by a certificate issuer that holds biometric information of a user; and
a terminal, wherein
the terminal includes:
   an acquisition means that acquires, from the server apparatus, a biometric information certificate that certifies biometric information of a person to whom a certificate is issued and includes biometric information of the person to whom the certificate is issued;
   a verification means that performs identity verification using biometric information obtained from the acquired biometric information certificate and biometric information of the user; and
   a storage means that stores the acquired biometric information certificate in a case where the identity verification is determined to be successful.

### [Supplementary Note 11]

A control method of a terminal, the control method including:
acquiring, from a certificate issuer that holds biometric information of a user, a biometric information certificate that certifies biometric information of a person to whom a certificate is issued and includes biometric information of the person to whom the certificate is issued; performing identity verification using biometric information obtained from the acquired biometric information certificate and biometric information of the user; and
storing the acquired biometric information certificate in a case where the identity verification is determined to be successful.

### [Supplementary Note 12]

A computer-readable storage medium storing a program causing a computer mounted on a terminal to perform processing for:
acquiring, from a certificate issuer that holds biometric information of a user, a biometric information certificate that certifies biometric information of a person to whom a certificate is issued and includes biometric information of the person to whom the certificate is issued;
performing identity verification using biometric information obtained from the acquired biometric information certificate and biometric information of the user; and
storing the acquired biometric information certificate in a case where the identity verification is determined to be successful.

In addition, a part or all of configurations described in supplementary notes 2 to 9 dependent on supplementary note 1 described above may also depend on supplementary notes 10, 11, and 12 by the same dependent relationship as supplementary notes 2 to 9. Furthermore, not limited to supplementary notes 1, 10, 11, and 12, within a range not departing from each example embodiment described above, a part or all of configurations described as supplementary notes may similarly depend on various hardware, software, various recording means for recording software, or systems.

It should be noted that the entire disclosure of the above patent literature is incorporated herein by reference thereto. While the example embodiments of the present invention have thus been described, the present invention is not limited to these example embodiments. It is to be understood to those skilled in the art that these example embodiments are only examples and that various variations are possible without departing from the scope and spirit of the present invention. That is, the present invention of course includes various variations and modifications that could be made by those skilled in the art in accordance with the overall disclosure including the claims and the technical concept.

### [Reference Signs List]

10 server apparatus
20 service server
21 business operator terminal
21-1 business operator terminal
21-2 business operator terminal
30 terminal
100 terminal
101 acquisition means
102 verification means
103 storage means
201 communication control unit
202 acquisition control unit
203 utilization control unit
204 storage unit
205 identity verification unit
301 communication control unit
302 certificate issuance unit
303 storage unit
311 processor
312 memory
313 input-output interface
314 communication interface
401 communication control unit
402 service provision control unit
403 storage unit

## Claims

1. A terminal comprising:
an acquisition means that acquires, from a certificate issuer that holds biometric information of a user, a biometric information certificate that certifies biometric information of a person to whom a certificate is issued and includes biometric information of the person to whom the certificate is issued;
a verification means that performs identity verification using biometric information obtained from the acquired biometric information certificate and biometric information of the user; and
a storage means that stores the acquired biometric information certificate in a case where the identity verification is determined to be successful.

2. The terminal according to claim 1, wherein the verification means performs the identity verification using the biometric information obtained from the acquired biometric information certificate and biometric information obtained by capturing the user.

3. The terminal according to claim 2, wherein the acquisition means acquires the biometric information certificate by transmitting, to the certificate issuer, a certificate issuance request including information for identifying the person to whom the biometric information certificate is issued.

4. The terminal according to claim 3, wherein the acquisition means transmits, to the certificate issuer, the certificate issuance request including a type of biometric information to be certified by the biometric information certificate.

5. The terminal according to claim 4, wherein the acquisition means acquires the biometric information certificate as a credential certificate from the certificate issuer.

6. The terminal according to any one of claims 1 to 5, wherein the acquisition means acquires the biometric information certificate related to a face of a person.

7. The terminal according to any one of claims 1 to 5, wherein the storage means stores the acquired biometric information certificate in a digital wallet.

8. The terminal according to claim 7, wherein the acquisition means stores, in a case where the acquired biometric information certificate is valid, the acquired biometric information certificate in the digital wallet.

9. The terminal according to claim 8, wherein the biometric information certificate is generated using biometric information obtained from a public identification document of the person to whom the certificate is issued.

10. A system comprising:
a server apparatus that is managed by a certificate issuer that holds biometric information of a user; and
a terminal, wherein
the terminal comprises:
an acquisition means that acquires, from the server apparatus, a biometric information certificate that certifies biometric information of a person to whom a certificate is issued and includes biometric information of the person to whom the certificate is issued;
a verification means that performs identity verification using biometric information obtained from the acquired biometric information certificate and biometric information of the user; and
a storage means that stores the acquired biometric information certificate in a case where the identity verification is determined to be successful.

11. A control method of a terminal, the control method comprising:
acquiring, from a certificate issuer that holds biometric information of a user, a biometric information certificate that certifies biometric information of a person to whom a certificate is issued and includes biometric information of the person to whom the certificate is issued;
performing identity verification using biometric information obtained from the acquired biometric information certificate and biometric information of the user; and
storing the acquired biometric information certificate in a case where the identity verification is determined to be successful.

12. A computer-readable storage medium storing a program causing a computer mounted on a terminal to perform processing for:
acquiring, from a certificate issuer that holds biometric information of a user, a biometric information certificate that certifies biometric information of a person to whom a certificate is issued and includes biometric information of the person to whom the certificate is issued;
performing identity verification using biometric information obtained from the acquired biometric information certificate and biometric information of the user; and
storing the acquired biometric information certificate in a case where the identity verification is determined to be successful.
